# EUROPEAN PATENT APPLICATION

(11) **EP 4 830 903 A1**
(43) Date of publication of application: **28.10.2026**
(21) Application number: 23962202.0
(22) Date of filing: 20.12.2023
(51) Int. Cl.: B29C 64/40, B29C 64/314, B33Y 70/10

(54) **PHOTOCURABLE COMPOSITION FOR SUPPORT MATERIAL FORMED BY INKJET 3D PRINTER AND USE THEREOF, AND SUPPORT MATERIAL AND OPTICALLY BUILT-UP ARTICLE PRODUCTION METHOD USING SAID PHOTOCURABLE COMPOSITION**

(71) Applicant: Nippon Shokubai Co., Ltd., Osaka-shi, Osaka 541-0043 (JP)
(72) Inventor: KOINUMA, Ryosuke, Suita-shi, Osaka 564-0034 (JP); SUWA, Keisuke, Suita-shi, Osaka 564-0034 (JP); OKEDA, Risa, Himeji-shi, Hyogo 671-1292 (JP); TSUJINO, Yasunori, Suita-shi, Osaka 564-0034 (JP)
(74) Representative: Müller-Boré & Partner Patentanwälte PartG mbB
(86) International application number: PCT/JP2023/045757
(87) International publication number: WO 2025/134281

(57) **Abstract**

An object of the present invention is to provide a photocurable composition capable of enhancing water solubility, a support performance, and transparency of a support material formed by an inkjet 3D printer. The photocurable composition for a support material formed by an inkjet 3D printer according to the present invention that solves said problem is characterized in that the photocurable composition contains a polymerizable monomer (A) having an oxyalkylene group and a water-soluble polymerizable monomer (B) other than the polymerizable monomer (A).

## Description

### Technical Field

The present invention relates to a photocurable composition for a support material formed by an inkjet 3D printer and use thereof, and methods for producing a support material and a photocured molded article using the photocurable composition.

### Background Art

In recent years, there has been proposed a photocuring molding process using an inkjet 3D printer. In this method, a liquid photocurable composition ejected from an inkjet nozzle is cured and laminated, and thus, a shaped article is produced. As an ink for an inkjet 3D printer used in the photocuring molding process, a photocurable composition for forming a molded body (model material) and a photocurable composition for forming a support material used for preventing the model material from collapsing when the model material is three dimensionally stacked are used. Once the photo-cured model material is laminated on the photo-cured support material, the support material is removed, and thus, for example, an overhang structure and a hollow structure can be shaped.

Patent Literature 1 describes a photocurable composition for a support material, the composition containing a water-soluble ethylenically unsaturated monomer containing an ionic group and a counter ion, and a photopolymerization initiator. Patent Literature 1 discloses that a support material formed by the composition has excellent water solubility and sufficient hardness (that is, sufficient support performance).

Patent Literature 2 describes a photocurable composition for a support material, the composition containing a water-soluble ethylenically unsaturated monomer containing an ionic group and a counter ion and having a water content of 10 mass% or less in 100 mass% of the photocurable composition. Patent Literature 2 discloses that the composition has excellent curability, and a support material formed by the composition has sufficient hardness and excellent solubility in a solvent.

### Citation List

### Patent Literature

Patent Literature 1: WO 2018/043582
Patent Literature 2: WO 2019/167948

### Summary of Invention

### Technical Problem

There is needed a photocurable composition for a support material formed by an inkjet 3D printer, the photocurable composition imparting a cured product after curing to better water solubility and support performance as well as enhanced transparency.

Accordingly, the present invention aims to provide a photocurable composition that can enhance water solubility, support performance, and transparency of a cured product (support material) formed by an inkjet 3D printer.

### Solution to Problem

As a result of intensive studies to solve the above-mentioned problems, the present inventors have found that water solubility, support performance, and transparency of a cured product (support material) formed by an inkjet 3D printer can be enhanced by using a photocurable composition containing a polymerizable monomer (A) having an oxyalkylene group and a water-soluble polymerizable monomer (B) other than the polymerizable monomer (A), and thus completed the present invention.

That is, the present invention is as follows.
[1] A photocurable composition for a support material formed by an inkjet 3D printer, the photocurable composition containing a polymerizable monomer (A) having an oxyalkylene group and a water-soluble polymerizable monomer (B) other than the polymerizable monomer (A).
[2] The photocurable composition according to [1], wherein the polymerizable monomer (B) is an ionic monomer having an ionic group.
[3] The photocurable composition according to [2], wherein the ionic monomer contains an ionic monomer having a polyvalent metal ion that is a conjugate of the ionic group.
[4] The photocurable composition according to [3], wherein a content of the ionic monomer having a polyvalent metal ion is 50 mass% or more in 100 mass% of the polymerizable monomer (B).
[5] The photocurable composition according to any one of [1] to [4], wherein a total content of the polymerizable monomer (A) and the polymerizable monomer (B) is less than 50 mass% in 100 mass% of the photocurable composition.
[6] The photocurable composition according to any one of [1] to [5], wherein the polymerizable monomer (A) is a monomer represented by Formula (1):

   Z-(R^{a}-O)ₙ-R^{b} (1)

   where in Formula (1), Z represents an ethylenically unsaturated bond-containing group, R^{a} represents an alkylene group, R^{b} represents a hydrogen atom or a hydrocarbon group optionally having a substituent, and n represents an integer of 1 or more; provided that, when n is an integer of 2 or more, a plurality of R^{a}s are independently the same or different from each other.
[7] The photocurable composition according to [6], wherein in Formula 1,
   Z represents a group represented by CH₂=C(R¹)-C(=O)-O-* or CH₂=C(R¹)-(CH₂)ₘ-O-* (R¹ represents a hydrogen atom or an alkyl group having from 1 to 4 carbons and optionally having a substituent; m represents an integer of 0 to 6; and * represents a bond);
   R^{a} represents an alkylene group having from 1 to 4 carbons;
   R^{b} represents a hydrogen atom or an alkyl group having from 1 to 4 carbons; and
   n represents an integer of 1 to 100.
[8] The photocurable composition according to any one of [1] to [7], further containing a photopolymerization initiator.
[9] The photocurable composition according to any one of [1] to [8], wherein, when a cured product piece (2 cm × 2 cm × 3 mm) obtained by irradiation with light of 100 mW/cm² for three minutes is added into 50 mL of water at 25°C and left to stand for three hours, 50 mass% or more of the cured product piece dissolves.
[10] A method for producing a support material, the method including irradiating the photocurable composition described in any one of [1] to [9] with light.
[11] A method for producing a photocured molded article, the method including:
   forming a precursor of the photocured molded article, by repeating a support material layer-forming step A including irradiating the photocurable composition described in any one of [1] to [9] with light and a model material layer-forming step B performed at the same time as and/or a different time from the forming step A, and the step A and the step B being performed a plurality of times, respectively; and
   removing a support material composed of the support material layer from the precursor of the photocured molded article.
[12] Use of the photocurable composition described in any one of [1] to [9] for forming a support material by an inkjet 3D printer.
[13] A method of using a photocurable composition (I), the method including ejecting
   the photocurable composition (I) described in any one of [1] to [9], and
   a photocurable composition (II) different from the photocurable composition (I) from different ejection heads in an inkjet 3D printer.

### Advantageous Effects of Invention

According to the present invention, it is possible to provide a photocurable composition capable of enhancing the water solubility, the support performance, and the transparency of the cured product (support material) formed by the inkjet 3D printer.

### Description of Embodiments

An embodiment of the present invention will be described below, but the present invention is not limited thereto. In the present specification, a numerical range described as "from A to B" means "A or more and B or less", unless otherwise specified. Furthermore, the term "(meth)acrylic acid" means acrylic acid or methacrylic acid, and the term "(meth)acrylate" means acrylate or methacrylate. The same applies to the terms "(meth)acryloxy" and "(meth)acryloyl", for example.

### 1. Photocurable composition for support material formed by inkjet 3D printer

A photocurable composition for a support material formed by an inkjet 3D printer according to the present invention (hereinafter, sometimes simply referred to as a "photocurable composition") contains a polymerizable monomer (A) having an oxyalkylene group and a water-soluble polymerizable monomer (B) other than the polymerizable monomer (A). From the inclusion of the polymerizable monomers (A) and (B) in the photocurable composition according to the present invention, a support material having enhanced water solubility, support performance, and transparency can be obtained.

The photocurable composition described below is used for forming a support material by an inkjet 3D printer. That is, the photocurable composition is a composition for use in an inkjet 3D printer. The composition may be used as an ink for an inkjet 3D printer as it is, or the composition may be a composition containing each component at a high concentration so that the photocurable composition is mixed with a solvent at the time of use and thus, the mixture can be used as an ink for an inkjet 3D printer. The content of each component of the photocurable composition described below indicates the content of each component in the photocurable composition when used as an ink for an inkjet 3D printer, unless otherwise specified.

### 1-1. Polymerizable monomer (A) having oxyalkylene group

The photocurable composition according to the present invention contains a polymerizable monomer (A) having an oxyalkylene group. By containing the polymerizable monomer (A) having an oxyalkylene group, the photocurable composition tends to enhance the water solubility, the support performance, and the transparency, and particularly, the transparency of the resulting cured product (support material). In the present specification, the term "polymerizable monomer" refers to a compound having one or more ethylenically unsaturated groups, the compound being polymerized by, for example, light.

The number of oxyalkylene groups contained in one molecule of the polymerizable monomer (A) is 1 or more, preferably from 1 to 100, more preferably from 2 to 80, further preferably from 4 to 60, and even further preferably from 5 to 30.

The polymerizable monomer (A) is preferably a monomer represented by Formula (1x), and more preferably a monomer represented by Formula (1):

Z-((R^{a}-O)ₙ-R^{b})ₓ (1x)

Z-(R^{a}-O)ₙ-R^{b} (1)

where, Z represents an ethylenically unsaturated bond-containing group; R^{a} represents an alkylene group; R^{b} represents a hydrogen atom or a hydrocarbon group optionally having a substituent; n represents an integer of 1 or more; and x represents an integer of 1 to 4. When n or x is an integer of 2 or more, a plurality of R^{a}s and R^{b}s may be the same or different from each other.

The ethylenically unsaturated bond-containing group represented by Z is a monovalent to tetravalent group having one or more ethylenically unsaturated bonds. The valence corresponds to the number of bonds of the ethylenically unsaturated bond-containing group to R^{a}. When x is 1 in Formula (1x), Z is a monovalent group, and when x is 2 in Formula (1x), Z is a divalent group. In Formula (1), Z is a monovalent group.

The number of ethylenically unsaturated bonds contained in the ethylenically unsaturated bond-containing group is preferably from 1 to 3, more preferably 1.

The ethylenically unsaturated bond-containing group is preferably a group having one ethylenically unsaturated group, for example, an alkene mono-, di-, tri-, or tetra-yl group having about 2 to 10 carbons; or a group bonded to the alkene mono-, di-, tri-, or tetra-yl group and one or more divalent groups (a carbonyl group and -O-, for example). The ethylenically unsaturated bond-containing group having one ethylenically unsaturated group has more preferably an ethylenically unsaturated bond at the end, further preferably a group represented by CH₂=C(R¹)-*, even further preferably a group represented by CH₂=C(R¹)-C(=O)-O-* or CH₂=C(R¹)-(CH₂)ₘ-O-*, and particularly preferably a group represented by CH₂=C(R¹)-C(=O)-O-*.

R¹ represents a hydrogen atom or an alkyl group having from 1 to 4 carbons and optionally having a substituent; m represents an integer of 0 to 6; and * represents a bond.

Specific examples of the alkyl group having from 1 to 4 carbons represented by R¹ include a methyl group, an ethyl group, an n-propyl group, an isopropyl group, an n-butyl group, an isobutyl group, and a tert-butyl group.

The alkyl group having from 1 to 4 carbons represented by R¹ may have a substituent, and examples of the substituent include halogen atoms such as a fluorine atom, a chlorine atom, a bromine atom, and an iodine atom; a hydroxy group; a thiol group; a group represented by *-C(=O)-R; a group represented by *-O-R; and a group represented by *-S-R. Here, * represents a bond, and R represents a hydrocarbon group.

Examples of the hydrocarbon group represented by R include groups exemplified as the hydrocarbon group represented by R^{b} described below. In particular, an alkyl group or an aromatic hydrocarbon group is preferable, and an alkyl group having from 1 to 4 carbons or an aromatic hydrocarbon group having from 6 to 10 carbons is more preferable.

R¹ is preferably a hydrogen atom or an alkyl group having from 1 to 4 carbons, more preferably a hydrogen atom, a methyl group, or an ethyl group, and particularly preferably a hydrogen atom or a methyl group.

m is preferably an integer of 1 to 6, more preferably an integer of 1 to 4, and further preferably 1 or 2.

In particular, the ethylenically unsaturated bond-containing group represented by Z is preferably a group represented by CH₂=C(H)-C(=O)-O-*, a group represented by CH₂=C(CH₃)-C(=O)-O-*, a group represented by CH₂=C(H)-(CH₂)ₘₗ-O-*, or a group represented by CH₂=C(CH₃)-(CH₂)ₘₗ-O-* (ml represents an integer of 1 to 4).

In addition, from the viewpoint of further enhancing the transparency of the resulting cured product, it is preferable to contain a compound in which Z in Formula (1) is a group represented by CH₂=C(R¹)-C(=O)-O-*. The content of the compound in which Z is a group represented by CH₂=C(R¹)-C(=O)-O-* in Formula (1) is preferably 30 mass% or more, more preferably 60 mass% or more, further preferably 80 mass% or more, and even further preferably 90 mass% or more, or may be 100 mass%, in 100 mass% of the polymerizable monomer (A).

The alkylene group represented by R^{a} may be linear or branched, but the alkylene group is preferably linear.

The number of carbons in the alkylene group represented by R^{a} is preferably from 1 to 6, more preferably from 1 to 4, and further preferably 2 or 3.

Specific examples of the alkylene group represented by R^{a} include linear alkylene groups such as a methylene group, an ethylene group, a 1,3-propylene group, a 1,4-butylene group, a 1,5-pentylene group, and a 1,6-hexylene group; and branched alkylene groups such as a 1,2-propylene group, a 1,2-butylene group, a 1,3-butylene group, a 2,3-butylene group, and a 1,2-hexylene group.

The alkylene group represented by R^{a} is preferably an alkylene group having from 1 to 4 carbons, more preferably a linear alkylene group having from 1 to 4 carbons, and further preferably a linear alkylene group having 2 or 3 carbons.

In Formula (1x) or Formula (1), when n is an integer of 2 or more and two or more types of the alkylene groups represented by R^{a} are contained, that is, when the compound represented by Formula (1x) or Formula (1) contains two or more types of alkyleneoxy groups, the alkyleneoxy groups may be added by random addition, block addition, and alternate addition, for example.

The hydrocarbon group represented by R^{b} may be an aliphatic hydrocarbon group, an aromatic hydrocarbon group, or a group with the aliphatic hydrocarbon group and the aromatic hydrocarbon being combined.

Examples of the aliphatic hydrocarbon group include:
alkyl groups (preferably alkyl groups having from 1 to 4 carbons) such as a methyl group, an ethyl group, an n-propyl group, an isopropyl group, an n-butyl group, an isobutyl group, and a tert-butyl group;
alkenyl groups (preferably alkenyl groups having from 2 to 6 carbons) such as a vinyl group, a n-propenyl group, an isopropenyl group, a 1-butenyl group, a 2-butenyl group, a 1-pentenyl group, a 2-pentenyl group, a 2-methyl-1-butenyl group, a 2-methyl-2-butenyl group, and a 3-methyl-1-butenyl group; and
cycloalkyl groups (preferably cycloalkyl groups having from 3 to 8 carbons) such as a cyclopropyl group, a cyclobutyl group, a cyclopentyl group, a cyclohexyl group, a 3-methylcyclohexyl group, a 4-methylcyclohexyl group, and a 4-ethylcyclohexyl group.
Among these, the aliphatic hydrocarbon group is preferably an alkyl group, more preferably an alkyl group having from 1 to 4 carbons, further preferably a methyl group or an ethyl group, and particularly preferably a methyl group.

Examples of the aromatic hydrocarbon group include a phenyl group, a methylphenyl group, a dimethylphenyl group, a trimethylphenyl group, a 4-tert-butylphenyl group, and a naphthyl group. The aromatic hydrocarbon group is preferably an aromatic hydrocarbon group having from 6 to 10 carbons.

Examples of the group with the aliphatic hydrocarbon group and the aromatic hydrocarbon group combined include aralkyl groups such as a benzyl group and a phenethyl group. An aralkyl group having from 7 to 12 carbons is preferable as the group with the aliphatic hydrocarbon group and the aromatic hydrocarbon group combined.

The hydrocarbon group represented by R^{b} may have a substituent, and examples of the substituent include the groups exemplified as the substituent which the alkyl group having from 1 to 4 carbons represented by R¹ may have, and the same is applied to the preferred aspect thereof.

R^{b} is preferably a hydrogen atom or an alkyl group, more preferably a hydrogen atom or an alkyl group having from 1 to 4 carbons, further preferably a hydrogen atom, a methyl group, or an ethyl group, and particularly preferably a hydrogen atom or a methyl group.

n is preferably an integer of 1 to 100, more preferably an integer of 2 to 80, further preferably an integer of 4 to 60, and even further preferably an integer of 5 to 30.

When the polymerizable monomer (A) is a mixture of monomers having different values of n in Formula (1) from each other, n may be an average value thereof.

The compound represented by Formula (1) is preferably a compound, wherein

Z is a group represented by CH₂=C(R¹)-C(=O)-O-* or CH₂=C(R¹)-(CH₂)ₘ-O-* (R¹, m, and * are as defined above); R^{a} represents an alkylene group having from 1 to 4 carbons; R^{b} represents a hydrogen atom or an alkyl group having from 1 to 4 carbons; and n represents an integer of 1 to 100.

More preferably, the compound represented by Formula (1) is a compound, wherein

Z is a group represented by CH₂=C(R²)-C(=O)-O-* or CH₂=C(R²)-(CH₂)ₘ₂-O-* (R² represents a hydrogen atom or a methyl group; m2 represents an integer of 1 to 4, and * represents a bond); R^{a} represents an alkylene group having 2 or 3 carbons; R^{b} represents a hydrogen atom or a methyl group; and n represents is an integer of 5 to 30.

Specific examples of the polymerizable monomer (A) include:
(meth)acrylate compounds having an oxyethylene group such as ethylene glycol (meth)acrylate, ethylene glycol methyl ether (meth)acrylate, poly(ethylene glycol) (meth)acrylate having 2 to 100 repeating ethylene glycol units (that is, oxyethylene groups), and poly(ethylene glycol) methyl ether (meth)acrylate having 2 to 100 repeating ethylene glycol units (that is, oxyethylene groups);
(meth)acrylate compounds having an oxypropylene group such as propylene glycol (meth)acrylate, propylene glycol monomethyl ether (meth)acrylate, poly(propylene glycol) (meth)acrylate having 2 to 100 repeating propylene glycol units (that is, oxypropylene groups), and poly(propylene glycol) monomethyl ether (meth)acrylate having 2 to 100 repeating propylene glycol units (that is, oxypropylene groups);
ethylene oxide adducts of unsaturated alcohols such as an ethylene oxide (hereinafter EO) adduct (number of moles of EO added: from 1 to 100 mol) of vinyl alcohol, an EO adduct (number of moles of EO added: from 1 to 100 mol) of (meth)allyl alcohol, an EO adduct (number of moles of EO added: from 1 to 100 mol) of 3-buten-1-ol, an EO adduct (number of moles of EO added: from 1 to 100 mol) of isoprene alcohol, an EO adduct (number of moles of EO added: from 1 to 100 mol) of 3-methyl-2-buten-1-ol, an EO adduct (number of moles of EO added: from 1 to 100 mol) of 2-methyl-3-buten-2-ol, an EO adduct (number of moles of EO added: from 1 to 100 mol) of 2-methyl-2-buten-1-ol, and an EO adduct (number of moles of EO added: from 1 to 100 mol) of 2-methyl-3-buten-1-ol; and
propylene oxide adducts of unsaturated alcohols such as a propylene oxide (hereinafter PO) adduct (number of moles of PO added: from 1 to 100 mol) of vinyl alcohol, a PO adduct (number of moles of PO added: from 1 to 100 mol) of (meth)allyl alcohol, a PO adduct (number of moles of PO added: from 1 to 100 mol) of 3-buten-1-ol, a PO adduct (number of moles of PO added from 1 to 100 mol) of isoprene alcohol, a PO adduct (number of moles of PO added: from 1 to 100 mol) of 3-methyl-2-buten-1-ol, a PO adduct (number of moles of PO added: from 1 to 100 moles) of 2-methyl-3-buten-2-ol, a PO adduct (number of moles of PO added: from 1 to 100 mol) of 2-methyl-2-buten-1-ol, and a PO adduct (number of moles of PO added: from 1 to 100 mol) of 2-methyl-3-buten-1-ol.

As the polymerizable monomer (A), a commercially available product may be used. Examples of the commercially available product include NK Ester M-20G, M-40G, M-90G, M-130G, M-230G, M-450G, AM-90G, AM-130G, and AM-230G manufactured by SHIN-NAKAMURA CHEMICAL Co., Ltd.; and BLEMMER (trade name) PME-100, PME-200, PME-400, PME-1000, PME-4000, and AME-400 manufactured by NOF CORPORATION.

The photocurable composition according to the present invention may contain a single type of the polymerizable monomer (A) alone, or may contain two or more types thereof.

It is one of the preferred embodiments to use a combination of two or more types of the polymerizable monomers (A).

When using two or more types of the polymerizable monomers (A) in combination, it is preferable to use a combination of polymerizable monomers (A) having different numbers of oxyalkylene groups from each other.

The embodiment of the combined use may be, for example, an embodiment of using a mixture of two or more types of the polymerizable monomers (A) having consecutive numbers of oxyalkylene groups, such as a mixture of a polymerizable monomer (A) having three oxyalkylene groups, a polymerizable monomer (A) having four oxyalkylene groups, and a polymerizable monomer (A) having five oxyalkylene groups (for example, a mixture of compounds, each of the compounds having n of three, four, or five in Formula (1x) or Formula (1)), or an embodiment of using a combination of two or more types of the polymerizable monomers (A) having different average numbers of oxyalkylene groups described below from each other.

In the photocurable composition according to the present disclosure, the polymerizable monomer (A) preferably has a broad molecular weight distribution. The molecular weight distribution of the polymerizable monomer (A) exhibits preferably a monomodality or multimodality, and more preferably a monomodality or bimodality. The molecular weight distribution of the polymerizable monomer (A) can be measured by gel permeation chromatography (GPC) and specifically, can be measured under the same conditions as a method for measuring the weight average molecular weight of the polymerizable monomer (A) described below.

The photocurable composition according to the present invention tends to exhibit excellent photocurability regardless of the form.

In the embodiment in which a combination of two or more types of the polymerizable monomers (A) having different average numbers of oxyalkylene groups from each other is used as the polymerizable monomer (A), it is preferable to use a combination of two types of the polymerizable monomers (A) having different average numbers of oxyalkylene groups from each other. That is, in the embodiments in which the polymerizable monomer (A) exhibits a multimodal molecular weight distribution, the molecular weight distribution of the polymerizable monomer (A) preferably exhibits bimodality.

When a combination of two or more types of the polymerizable monomers (A) having different average numbers of oxyalkylene groups from each other is used, the difference between the average number of oxyalkylene groups of the polymerizable monomer (A) having the largest average number of oxyalkylene groups and the average number of oxyalkylene groups of the polymerizable monomer (A) having the smallest average number of oxyalkylene groups is preferably 5 or more, more preferably from 5 to 20. For example, a combination of a polymerizable monomer (A) having an average number of oxyalkylene groups of 1 to 5 and a polymerizable monomer (A) having an average number of oxyalkylene groups of 10 or more, and a combination of a polymerizable monomer (A) having an average number of oxyalkylene groups of 6 to 15 and a polymerizable monomer (A) having an average number of oxyalkylene groups of 20 or more are preferable. A combination of a polymerizable monomer (A) having an average number of oxyalkylene groups of 1 to 5 and a polymerizable monomer (A) having an average number of oxyalkylene groups of 10 to 20, and a combination of a polymerizable monomer (A) having an average number of oxyalkylene groups of 10 to 15 and a polymerizable monomer (A) having an average number of oxyalkylene groups of 20 to 30 are more preferable.

When a combination of the polymerizable monomer (A) having an average number of oxyalkylene groups of 1 to 5 (hereinafter, A1) and the polymerizable monomer (A) having an average number of oxyalkylene groups of 10 or more (hereinafter, A2) is used, the usage ratio (A1:A2) thereof is preferably from 10:90 to 90:10, more preferably from 30:70 to 70:30, and further preferably from 40:60 to 60:40, on a mass basis.

In addition, when a combination of the polymerizable monomer (A) having an average number of oxyalkylene groups of 6 to 15 (hereinafter, A3) and the polymerizable monomer (A) having an average number of oxyalkylene groups of 20 or more (hereinafter, A4) is used, the usage ratio (A3:A4) thereof is preferably from 10:90 to 90:10, more preferably from 30:70 to 70:30, and further preferably from 40:60 to 60:40, on a mass basis.

When a combination of two or more types of the polymerizable monomers (A) is used, preferably, all of the ethylenically unsaturated bond-containing groups contained in the polymerizable monomers (A) are the groups represented by CH₂=C(R¹)-C(=O)-O-* or all of the ethylenically unsaturated bond-containing groups are the groups represented by CH₂=C(R¹)-(CH₂)ₘ-O-*. More preferably all of the ethylenically unsaturated bond-containing groups are the groups represented by CH₂=C(R¹)-C(=O)-O-*. Further preferably, all of the ethylenically unsaturated bond-containing groups are the groups represented by CH₂=C(H)-C(=O)-O-*, or all of the ethylenically unsaturated bond-containing groups are the groups represented by CH₂=C(CH₃)-C(=O)-O-*.

The weight average molecular weight of the polymerizable monomer (A) is not particularly limited, but the weight average molecular weight is preferably from 160 to 4500.

The weight average molecular weight of the polymerizable monomer (A) can be measured by gel permeation chromatography (GPC) and specifically may be measured under the following conditions:
Device: High-performance GPC system (HLC-8320GPC) manufactured by Tosoh Corporation
Detector: RI
Column: SHODEX (trade name) Asahipak (trade name) GF-310-HQ, GF-710-HQ, GF-1G 7B, manufactured by Showa Denko K.K.
Column temperature: 40°C
Flow rate: 0.5 mL/min
Calibration curve: POLYACRYLIC ACID STANDARD manufactured by Sowa Kagaku Co., Ltd.
Eluent: 0.1 N aqueous sodium acetate solution/acetonitrile in 3/1 (weight ratio).

The content of the polymerizable monomer (A) is preferably from 3 to 60 mass%, more preferably from 5 to 45 mass%, and further preferably from 8 to 30 mass%, in 100 mass% of the photocurable composition.

The content of the polymerizable monomer (A) with respect to 100 mass% of the total amount of the polymerizable monomers (that is, the total amount of the polymerizable monomer (A), the polymerizable monomer (B), and a polymerizable monomer (C)) contained in the photocurable composition according to the present invention is preferably from 15 to 85 mass%, more preferably from 25 to 75 mass%, and further preferably from 35 to 70 mass%. By adjusting the content of the polymerizable monomer (A) to the above predetermined value or more, the transparency and the water solubility of the resulting cured product tend to be further enhanced. By adjusting the content of the polymerizable monomer (A) to the above predetermined value or less, the support performance of the resulting cured product tends to be further enhanced.

### 1-2. Water-soluble polymerizable monomer (B)

The photocurable composition according to the present invention contains a water-soluble polymerizable monomer (B) other than the polymerizable monomer (A). By containing the polymerizable monomer (B), the curability of the photocurable composition is improved, and the support performance and the water solubility of the resulting cured product are enhanced. The photocurable composition according to the present invention may contain a single type of the polymerizable monomer (B) alone, or may contain two or more types thereof.

In the present specification, the phrase "water-soluble polymerizable monomer" refers to a polymerizable monomer having a water solubility of 20 g/L or more at 20°C (hereinafter, water solubility (20°C)). In the present specification, X g of a polymerizable monomer (temperature: 20°C) is added to 50 cc of ion-exchanged water (temperature: 20°C) in a 100-cc screw-cap tube in a constant temperature and humidity chamber at a temperature of 20°C, and the mixture is stirred using a magnetic stirrer (with a rotator: length 10 mm × φ 4 mm) for five minutes. Next, the mixture is allowed to stand for 10 minutes, and the obtained solution is confirmed by visual observation. When the obtained solution becomes uniformly transparent in the visual observation, the water solubility (20°C) of the polymerizable monomer is determined to be Y g/L or more (Y equals to 20X). When the obtained solution does not become uniformly transparent, the water solubility (20°C) of the polymerizable monomer is determined to be less than Y g/L (Y equals to 20X). That is, the polymerizable monomer (B) can be said to be a polymerizable monomer that gives a uniformly transparent solution when 1 g of the polymerizable monomer is used in the measurement of the water solubility (20°C). The term "uniformly transparent" means that no phase separation is visually observed and that no white turbidity is observed.

The polymerizable monomer (B) preferably has a water solubility (20°C) of 100 g/L or more, more preferably 200 g/L or more, and further preferably 500 g/L or more.

The content of the polymerizable monomer (B) is preferably from 5 to 60 mass%, more preferably from 8 to 40 mass%, and further preferably from 10 to 25 mass%, in 100 mass% of the photocurable composition.

The content of the polymerizable monomer (B) with respect to 100 mass% of the total amount of the polymerizable monomers (that is, the total amount of the polymerizable monomers (A) to (C)) contained in the photocurable composition according to the present invention is preferably from 15 to 85 mass%, more preferably from 25 to 75 mass%, and further preferably from 30 to 65 mass%. By adjusting the content of the polymerizable monomer (B) to the above predetermined value or more, the support performance of the resulting cured product is further enhanced. By adjusting the content of the polymerizable monomer (B) to the above predetermined value or less, the water solubility of the resulting cured product can be further enhanced.

The mass ratio (B/A) of the polymerizable monomer (B) to the polymerizable monomer (A) is preferably from 0.1 to 5.0, more preferably from 0.3 to 3.0, and further preferably from 0.5 to 2.0. By adjusting the mass ratio (B/A) to the above range, the transparency and the water solubility of the resulting cured product tend to be enhanced.

The polymerizable monomer (B) preferably contains an ionic monomer having an ionic group (hereinafter, sometimes simply referred to as an ionic monomer).

Examples of the ionic group include an anionic group, and specific examples thereof include a group with a proton removed from an acidic group, such as a group with a proton removed from a carboxy group, a group with a proton removed from a phosphoric acid group, and a group with a proton removed from a sulfo group. In particular, the ionic group is preferably a group with a proton removed from a carboxy group.

Preferably, the ionic monomer further has a conjugate ion of the ionic group (hereinafter, may be referred to as a counter ion). The ionic monomer preferably has balanced charges of the ionic group and the counter ion as a whole. That is, the ionic monomer is preferably neutral as a whole.

The counter ion is preferably a cation, and specific examples include:
monovalent counter ions, such as alkali metal ions such as a sodium ion and a potassium ion, and ammonium; and
polyvalent counter ions typified by polyvalent metal ions such as a zinc ion, a magnesium ion, a calcium ion, an aluminum ion, and a neodymium ion.

In particular, from the viewpoint of further enhancing the support performance of the resulting cured product, the counter ion is preferably a polyvalent metal ion. That is, the ionic monomer preferably contains an ionic monomer having a polyvalent metal ion that is a conjugate of the ionic group (hereinafter, sometimes referred to as a polyvalent metal ion-containing ionic monomer). The counter ion contained in the polyvalent metal ion-containing ionic monomer is not particularly limited as long as it is a polyvalent metal ion. However, among polyvalent metal ions, the counter ion is preferably a divalent metal ion such as a zinc ion, a magnesium ion, a calcium ion, or a neodymium ion, more preferably a zinc ion, a magnesium ion, or a calcium ion, and particularly preferably a zinc ion.

As the ionic monomer, it is also preferable to use a combination of the polyvalent metal ion-containing ionic monomer and an ionic monomer having a monovalent cation as the counter ion (hereinafter, sometimes referred to as a monovalent cation-containing ionic monomer). The counter ion contained in the monovalent cation-containing ionic monomer is preferably an alkali metal ion or ammonium, more preferably a sodium ion, a potassium ion, or ammonium, and further preferably a potassium ion.

The content of the ionic monomer (particularly, the total content of the monovalent cation-containing ionic monomer and the polyvalent metal ion-containing ionic monomer) is preferably from 30 to 100 mass%, more preferably from 50 to 100 mass%, further preferably from 80 to 100 mass%, and particularly preferably from 95 to 100 mass%, in 100 mass% of the polymerizable monomer (B).

The content of the ionic monomer is preferably from 5 to 60 mass%, more preferably from 8 to 40 mass%, and further preferably from 10 to 25 mass%, in 100 mass% of the photocurable composition.

The content of the ionic monomer with respect to 100 mass% of the total amount of the polymerizable monomers (that is, the total amount of the polymerizable monomers (A) to (C)) contained in the photocurable composition according to the present invention is preferably from 15 to 85 mass%, more preferably from 25 to 75 mass%, and further preferably from 30 to 65 mass%. By adjusting the content of the ionic monomer to the above predetermined value or more, the support performance of the resulting cured product is further enhanced. By adjusting the content of the polymerizable monomer (B) to the above predetermined value or less, the water solubility of the resulting cured product can be further enhanced.

The content of the polyvalent metal ion-containing ionic monomer is, for example, from 20 to 100 mass%, preferably 35 mass% or more, more preferably 50 mass% or more, further preferably 65 mass% or more, even further preferably 80 mass% or more, and particularly preferably 90 mass% or more, in 100 mass% of the polymerizable monomer (B). By adjusting the content of the polyvalent metal ion-containing ionic monomer to the above range, the support performance of the resulting cured product can be further enhanced. In particular, by adjusting the content of the polyvalent metal ion-containing ionic monomer to 50 mass% or more, the effect of improving the support performance tends to be further enhanced. In addition, by adjusting the content of the polyvalent metal ion-containing ionic monomer to 50 mass% or more (preferably 65 mass% or more, more preferably 80 mass% or more, and further preferably 90 mass% or more), the viscosity of the photocurable composition can be reduced. By reducing the viscosity of the photocurable composition, ejection failure in an inkjet 3D printer, such as clogging in an ejection head, is less likely to occur. That is, the ejection stability is enhanced.

The content of the monovalent cation-containing ionic monomer may be, for example, 10 mass% or more or 20 mass% or more, in 100 mass% of the polymerizable monomer (B). The content of the monovalent cation-containing ionic monomer may be 100 mass% in 100 mass% of the polymerizable monomer (B). But, from the viewpoint of reducing the viscosity of the photocurable composition and further enhancing the support performance of the resulting cured product, the content thereof is preferably 80 mass% or less, more preferably 50 mass% or less, further preferably 35 mass% or less, even further preferably 20 mass% or less, and particularly preferably 10 mass% or less, or may be 0 mass%.

The mass ratio of the polyvalent metal ion-containing ionic monomer and the monovalent cation-containing ionic monomer (polyvalent metal ion-containing ionic monomer/monovalent cation-containing ionic monomer) contained in the photocurable composition is, for example, from 20/80 to 100/0, preferably from 35/65 to 100/0, more preferably from 50/50 to 100/0, further preferably from 60/40 to 100/0, and particularly preferably from 80/20 to 100/0. In particular, from the viewpoint of reducing the viscosity of the photocurable composition, the mass ratio is adjusted to preferably from 50/50 to 100/0, more preferably from 60/40 to 100/0, and further preferably from 80/20 to 100/0.

The ionic monomer containing a group with a proton removed from a carboxy group, as the ionic group is preferably a salt of an ethylenically unsaturated carboxylic acid.

Examples of the salt of the ethylenically unsaturated carboxylic acid include monovalent salts such as alkali metal salts such as a sodium salt and a potassium salt, and an ammonium salt; and polyvalent salts typified by polyvalent metal salts such a as zinc salt, a magnesium salt, a calcium salt, an aluminum salt, and a neodymium salt, of the unsaturated carboxylic acid.

The ethylenically unsaturated carboxylic acid contained in the salt of the ethylenically unsaturated carboxylic acid is a carboxylic acid compound having an ethylenically unsaturated group, and specific examples thereof include aliphatic unsaturated carboxylic acids such as (meth)acrylic acid, maleic acid, fumaric acid, 2-((meth)acryloyloxy)ethylhexahydrophthalic acid, 2-((meth)acryloyloxy)ethylsuccinic acid, N-(meth)acryloyl aspartic acid, and ω-(meth)acryloylalkane-1,1-dicarboxylic acid; and aromatic unsaturated carboxylic acids such as 2-((meth)acryloyloxy)benzoic acid, 3-((meth)acryloyloxy)benzoic acid, 4-((meth)acryloyloxy)benzoic acid, 2-((meth)acryloyloxy)ethyl phthalic acid, 2-vinylbenzoic acid, 3-vinylbenzoic acid, and 4-vinylbenzoic acid. In particular, the ethylenically unsaturated carboxylic acid is preferably, an aliphatic unsaturated carboxylic acid.

The number of carbons in the ethylenically unsaturated carboxylic acid contained in the salt of the ethylenically unsaturated carboxylic acid is preferably from 3 to 15, more preferably from 3 to 12, further preferably from 3 to 9, and particularly preferably from 3 to 6. By using a salt of an ethylenically unsaturated carboxylic acid having a small number of carbons, the hydrophobic moiety in the molecule can be reduced, and the water solubility of the resulting cured product can be further enhanced.

The ionic monomer containing the group with a proton removed from a phosphoric acid group as the ionic group is preferably a salt of an ethylenically unsaturated phosphoric acid.

Examples of the salt of the ethylenically unsaturated phosphoric acid include monovalent salts such as alkali metal salts such as a sodium salt and a potassium salt, and an ammonium salt; and polyvalent salts typified by polyvalent metal salts such as a zinc salt, a magnesium salt, a calcium salt, an aluminum salt, and a neodymium salt, of the ethylenically unsaturated phosphoric acid.

The ethylenically unsaturated phosphoric acid contained in the salt of the ethylenically unsaturated phosphoric acid is a phosphoric acid compound having an ethylenically unsaturated group, and specific examples thereof include mono (2-(meth)acryloyloxy)ethyl acid phosphate, phenyl (2-(meth)acryloyloxy)ethyl phosphate, acid phosphoxyethyl (meth)acrylate, ((meth)acryloyloxy)propyl acid phosphate, (meth)acryloyloxy-2-hydroxypropyl acid phosphate, (meth)acryloyloxy-3-hydroxypropyl acid phosphate, (meth)acryloyloxy-3-chloro-2-hydroxypropyl acid phosphate, vinylphosphoric acid, and p-vinylbenzene phosphoric acid.

The ionic monomer containing the group with a proton removed from a sulfo group as the ionic group is preferably a salt of an ethylenically unsaturated sulfonic acid.

Examples of the salt of the ethylenically unsaturated sulfonic acid include monovalent salts such as alkali metal salts such as a sodium salt and a potassium salt, and an ammonium salt; and polyvalent salts typified by polyvalent metal salts such as a zinc salt, a magnesium salt, a calcium salt, an aluminum salt, and a neodymium salt, of the ethylenically unsaturated sulfonic acid.

The ethylenically unsaturated sulfonic acid contained in the salt of the ethylenically unsaturated sulfonic acid is a sulfonic acid compound having an ethylenically unsaturated group, and specific examples thereof include allylsulfonic acid, isoprene sulfonic acid, 2-(meth)acrylamide ethylsulfonic acid, 3-(meth)acrylamide propylsulfonic acid, 4-(meth)acrylamide butylsulfonic acid, 2-(meth)acrylamide-2-methylpropane sulfonic acid, p-vinylbenzene sulfonic acid, and vinylsulfonic acid.

The ionic monomer is preferably a salt of the ethylenically unsaturated carboxylic acid, more preferably a monovalent salt and/or a polyvalent metal salt of the ethylenically unsaturated carboxylic acid, further preferably a polyvalent metal salt of the ethylenically unsaturated carboxylic acid, even further preferably a divalent metal salt such as a zinc salt, a magnesium salt, a calcium salt, or a neodymium salt, of the ethylenically unsaturated carboxylic acid, particularly preferably a zinc salt, a magnesium salt, or a calcium salt, of the ethylenically unsaturated carboxylic acid, and most preferably a zinc salt of the ethylenically unsaturated carboxylic acid.

It is also preferable to use a combination of the polyvalent metal salt of the ethylenically unsaturated carboxylic acid and the monovalent salt of the ethylenically unsaturated carboxylic acid. The monovalent salt of the ethylenically unsaturated carboxylic acid is preferably an alkali metal salt or an ammonium salt of the ethylenically unsaturated carboxylic acid, more preferably a sodium salt, a potassium salt, or an ammonium salt, of the ethylenically unsaturated carboxylic acid, and further preferably a potassium salt of the ethylenically unsaturated carboxylic acid.

The ethylenically unsaturated carboxylic acid contained in the salt of the ethylenically unsaturated carboxylic acid is most preferably (meth)acrylic acid. That is, the ionic monomer is preferably a salt of (meth)acrylic acid, more preferably a monovalent salt and/or a polyvalent metal salt of (meth)acrylic acid, further preferably a polyvalent metal salt of (meth)acrylic acid, even further preferably a divalent metal salt such as a zinc salt, a magnesium salt, a calcium salt, or a neodymium salt, of (meth)acrylic acid, particularly preferably a zinc salt, a magnesium salt, or a calcium salt, of (meth)acrylic acid, and most preferably a zinc salt of (meth)acrylic acid.

It is also preferable to use a combination of the polyvalent metal salt of (meth)acrylic acid and the monovalent salt of (meth)acrylic acid. The monovalent salt of (meth)acrylic acid is preferably an alkali metal salt or an ammonium salt of (meth)acrylic acid, more preferably a sodium salt, a potassium salt, or an ammonium salt, of (meth)acrylic acid, and further preferably a potassium salt of (meth)acrylic acid.

The content of the salt of the ethylenically unsaturated carboxylic acid (particularly, the salt of (meth)acrylic acid) is preferably from 30 to 100 mass%, more preferably from 50 to 100 mass%, further preferably from 80 to 100 mass%, and particularly preferably from 90 to 100 mass%, in 100 mass% of the polymerizable monomer (B).

The content of the salt of the ethylenically unsaturated carboxylic acid (particularly, the salt of (meth)acrylic acid) is preferably from 5 to 60 mass%, more preferably from 8 to 40 mass%, and further preferably from 10 to 25 mass%, in 100 mass% of the photocurable composition.

The content of the salt of the ethylenically unsaturated carboxylic acid (particularly, the salt of (meth)acrylic acid) with respect to 100 mass% of the total amount of the polymerizable monomers (that is, the total amount of the polymerizable monomers (A) to (C)) contained in the photocurable composition according to the present invention is preferably from 15 to 85 mass%, more preferably from 25 to 75 mass%, and further preferably from 30 to 65 mass%. By adjusting the content of the salt of the ethylenically unsaturated carboxylic acid to the above predetermined value or more, the support performance of the resulting cured product is further enhanced. By adjusting the content of the polymerizable monomer (B) to the above predetermined value or less, the water solubility of the resulting cured product can be further enhanced.

The content of the polyvalent metal salt of the ethylenically unsaturated carboxylic acid (particularly, the polyvalent metal salt of (meth)acrylic acid) is, for example, from 20 to 100 mass%, preferably 35 mass% or more, more preferably 50 mass% or more, further preferably 65 mass% or more, and even further preferably 80 mass% or more, in 100 mass% of the polymerizable monomer (B). By adjusting the content of the polyvalent metal salt of the ethylenically unsaturated carboxylic acid to the above range, the support performance of the resulting cured product can be further enhanced. In particular, by adjusting the content of the polyvalent metal salt of the ethylenically unsaturated carboxylic acid (particularly, the polyvalent metal salt of (meth)acrylic acid) to 50 mass% or more, the effect of improving the support performance tends to be further enhanced. In addition, by adjusting the content of the polyvalent metal salt of the ethylenically unsaturated carboxylic acid (particularly, the polyvalent metal salt of (meth)acrylic acid) to 50 mass% or more (preferably 65 mass% or more, and more preferably 80 mass% or more), the viscosity of the photocurable composition can be reduced.

The content of the monovalent salt of the ethylenically unsaturated carboxylic acid (particularly, the monovalent salt of (meth)acrylic acid) may be, for example, 10 mass% or more or 20 mass% or more in 100 mass% of the polymerizable monomer (B). The content of the monovalent salt of the ethylenically unsaturated carboxylic acid (particularly, the monovalent salt of (meth)acrylic acid) may be 100 mass% in 100 mass% of the polymerizable monomer (B), but from the viewpoint of reducing the viscosity of the photocurable composition and further enhancing the support performance of the resulting cured product, the content is preferably 80 mass% or less, more preferably 50 mass% or less, further preferably 35 mass% or less, even further preferably 20 mass% or less, and particularly preferably 10 mass% or less, or may be 0 mass%.

The mass ratio of the polyvalent metal salt of the ethylenically unsaturated carboxylic acid and the monovalent salt of the ethylenically unsaturated carboxylic acid (polyvalent metal salt of the ethylenically unsaturated carboxylic acid/monovalent salt of the ethylenically unsaturated carboxylic acid) contained in the photocurable composition is, for example, from 20/80 to 100/0, preferably from 35/65 to 100/0, more preferably from 50/50 to 100/0, further preferably from 60/40 to 100/0, and particularly preferably from 80/20 to 100/0. In addition, it is also preferable to adjust the mass ratio of the polyvalent metal salt of (meth)acrylic acid and the monovalent salt of (meth)acrylic acid (polyvalent metal salt of (meth)acrylic acid/monovalent salt of (meth)acrylic acid) contained in the photocurable composition to the above range. In particular, from the viewpoint of reducing the viscosity of the photocurable composition, the mass ratio (that is, polyvalent metal salt of the ethylenically unsaturated carboxylic acid/monovalent salt of the ethylenically unsaturated carboxylic acid, preferably polyvalent metal salt of (meth)acrylic acid/monovalent salt of (meth)acrylic acid) is adjusted to preferably from 50/50 to 100/0, more preferably from 60/40 to 100/0, and further preferably from 80/20 to 100/0.

Examples of the polymerizable monomer (B) other than the ionic monomers described above include (meth)acrylic acid; methyl (meth)acrylate; (meth)acryloylmorpholine; N-vinylpyrrolidone; and acrylamides such as (meth)acrylamide, N,N-dimethylacrylamide, N-hydroxyethyl acrylamide, and N-isopropylacrylamide.

The total content of the polymerizable monomer (A) and the polymerizable monomer (B) with respect to 100 mass% of the total amount of the polymerizable monomers (that is, the total amount of the polymerizable monomers (A) to (C)) contained in the photocurable composition according to the present invention is preferably from 50 to 100 mass% or more, more preferably 70 mass% or more, further preferably 90 mass% or more, and particularly preferably 98 mass% or more.

### 1-3. Polymerizable monomer (C)

The photocurable composition according to the present invention may contain a polymerizable monomer (C) (for example, a polymerizable monomer having a water solubility (20°C) of less than 20 g/L) other than the polymerizable monomers (A) and (B). Examples of the polymerizable monomer (C) include:
alkyl (meth)acrylates such as ethyl (meth)acrylate, propyl (meth)acrylate, butyl (meth)acrylate, 2-ethylhexyl (meth)acrylate, pentyl (meth)acrylate, isoamyl (meth)acrylate, octyl (meth)acrylate, isooctyl (meth)acrylate, isononyl (meth)acrylate, decyl (meth)acrylate, isodecyl (meth)acrylate, lauryl (meth)acrylate, tridecyl (meth)acrylate, isomyristyl (meth)acrylate, isostearyl (meth)acrylate, and n-stearyl (meth)acrylate; alicyclic hydrocarbon group-containing (meth)acrylates such as cyclohexyl (meth)acrylate, t-butylcyclohexyl (meth)acrylate, isobornyl (meth)acrylate, dicyclopentenyl (meth)acrylate, and dicyclopentanyl (meth)acrylate; aromatic hydrocarbon group-containing (meth)acrylates such as phenyl (meth)acrylate, benzyl (meth)acrylate, and 2-hydroxy-3-phenoxypropyl (meth)acrylate; (meth)acrylate compounds such as tetrahydrofurfuryl (meth)acrylate;
allyl ether compounds such as phenyl allyl ether, o-, m-, p-cresol monoallyl ethers, biphenyl-2-ol monoallyl ether, biphenyl-4-ol monoallyl ether, butyl allyl ether, cyclohexyl allyl ether, and cyclohexanemethanol monoallyl ether;
vinyl ether compounds such as butyl vinyl ether, butyl propenyl ether, butyl butenyl ether, hexyl vinyl ether, ethylhexyl vinyl ether, phenyl vinyl ether, benzyl vinyl ether, acetyl ethoxy ethoxy vinyl ether, cyclohexyl vinyl ether, and adamantyl vinyl ether; and
maleimide compounds such as phenylmaleimide, cyclohexylmaleimide, and n-hexylmaleimide.

These may be used alone or in combination of two or more thereof.

The content of the polymerizable monomer (C) is preferably 30 mass% or less, more preferably 10 mass% or less, and particularly preferably less than 2 mass%, in 100 mass% of the photocurable composition. By adjusting the content of the polymerizable monomer (C) to the above range, the odor of the photocurable composition can be further suppressed.

The total content of the polymerizable monomer (A), the polymerizable monomer (B), and the polymerizable monomer (C) (particularly, the total content of the polymerizable monomers (A) and (B)) is preferably 80 mass% or less, more preferably 60 mass% or less, further preferably less than 50 mass%, even further preferably 45 mass% or less, and particularly preferably 40 mass% or less, in 100 mass% of the photocurable composition. By adjusting the total amount of the polymerizable monomers (particularly, the total content of the polymerizable monomers (A) and (B)) to the above range, the viscosity of the photocurable composition can be reduced, and the thermal stability of the photocurable composition (specifically, the effect of suppressing the thickening when the photocurable composition is stored under high temperature conditions) can be enhanced.

The total content of the polymerizable monomer (A), the polymerizable monomer (B), and the polymerizable monomer (C) (particularly, the total content of the polymerizable monomers (A) and (B)) is preferably 8 mass% or more, more preferably 15 mass% or more, and further preferably 20 mass% or more, in 100 mass% of the photocurable composition. By adjusting the total amount of the polymerizable monomers (particularly, the total content of the polymerizable monomers (A) and (B)) to the above range, the support performance of the resulting cured product can be further enhanced.

That is, the total content of the polymerizable monomer (A), the polymerizable monomer (B), and the polymerizable monomer (C) (particularly, the total content of the polymerizable monomers (A) and (B)) is preferably from 8 to 80 mass%, more preferably from 15 to 60 mass%, further preferably 20 mass% or more and less than 50 mass%, even further preferably from 20 to 45 mass%, and particularly preferably from 20 to 40 mass%, in 100 mass% of the photocurable composition.

By increasing the proportion of the polyvalent metal ion-containing ionic monomer in the polymerizable monomer (B), the support performance of the resulting cured product can be enhanced even when the total amount of the polymerizable monomers in the photocurable composition is small. That is, in one preferred aspect, the total content of the polymerizable monomer (A), the polymerizable monomer (B), and the polymerizable monomer (C) (particularly, the total content of the polymerizable monomers (A) and (B)) is 8 mass% or more and less than 50 mass% (preferably from 15 to 45 mass%, more preferably from 20 to 45 mass%, and further preferably from 20 to 40 mass%) in 100 mass% of the photocurable composition and the content of the polyvalent metal ion-containing ionic monomer (preferably the polyvalent metal salt of the ethylenically unsaturated carboxylic acid, and more preferably the polyvalent metal salt of (meth)acrylic acid) is from 50 to 100 mass% in 100 mass% of the polymerizable monomer (B), from the viewpoint of achieving both the thermal stability of the photocurable composition and the support performance of the resulting cured product.

In addition, by increasing the proportion of the polyvalent metal ion-containing ionic monomer in the polymerizable monomer (B), the viscosity of the photocurable composition can be kept low even when the content proportion of the polymerizable monomer in the photocurable composition is high. That is, even when the total content of the polymerizable monomer (A), the polymerizable monomer (B), and the polymerizable monomer (C) (particularly, the total content of the polymerizable monomers (A) and (B)) is, for example, 15 mass% or more (preferably from 20 to 45 mass%) in 100 mass% of the photocurable composition, the viscosity of the photocurable composition can be kept low by adjusting the content of the polyvalent metal ion-containing ionic monomer (preferably the polyvalent metal salt of the ethylenically unsaturated carboxylic acid, and more preferably the polyvalent metal salt of (meth)acrylic acid) to 50 to 100 mass% in 100 mass% of the polymerizable monomer (B).

### 1-4. Organic acid and/or salt thereof

The photocurable composition according to the present invention may contain an organic acid and/or a salt thereof. By containing the organic acid and/or the salt thereof, the storage stability is further improved. The organic acid and/or the salt thereof is a compound having no polymerizable unsaturated group. In other words, the organic acid and/or the salt thereof does not contain any of the polymerizable monomers (A) to (C).

Examples of the organic acid include an organic carboxylic acid, an organic sulfonic acid, and an organic phosphoric acid.

Examples of the organic carboxylic acid include aliphatic carboxylic acids such as formic acid, acetic acid, propionic acid, butyric acid, valeric acid, hexanoic acid, heptanoic acid, octanoic acid, octylic acid, nonanoic acid, decanoic acid, lauric acid, myristic acid, palmitic acid, stearic acid, behenic acid, tridecanoic acid, pentadecanoic acid, heptadecanoic acid, lactic acid, malic acid, citric acid, oxalic acid, malonic acid, succinic acid, fumaric acid, adipic acid, glycine, polyacrylic acid, and polylactic acid; and aromatic carboxylic acids such as benzoic acid, phthalic acid, and salicylic acid.

Specific examples of the organic sulfonic acid include p-toluenesulfonic acid.

Specific examples of the organic phosphoric acid include phenylphosphonic acid.

In particular, the organic acid is preferably an organic carboxylic acid, more preferably an aliphatic carboxylic acid, further preferably lactic acid, propionic acid, and polyacrylic acid.

The salt of the organic acid is preferably a metal salt of the organic acid, and specific examples thereof include alkali metal salts such as a lithium salt, a sodium salt, and a potassium salt, of the organic acid described above; and alkaline earth metal salts such as a magnesium salt, a calcium salt, a strontium salt, and a barium salt, of the organic acid described above. In particular, the salt of the organic acid is preferably an alkali metal salt of the organic acid described above, more preferably a potassium salt of the organic acid described above.

The photocurable composition according to the present invention may contain a single type of these organic acids alone and/or a salt thereof or may contain two or more types thereof.

Examples of the organic acid and/or the salt thereof preferably include an organic carboxylic acid and a metal salt of an organic carboxylic acid, more preferably an aliphatic carboxylic acid and a metal salt of the aliphatic carboxylic acid, and still more preferably lactic acid, a metal salt of lactic acid, propionic acid, a metal salt of propionic acid, polyacrylic acid, and a metal salt of polyacrylic acid.

The content of the organic acid and/or the salt thereof is, for example, from 0 to 20 mass% in 100 mass% of the photocurable composition. In particular, from the viewpoint of enhancing storage stability, the content of the organic acid and/or the salt thereof is preferably from 0.1 to 20 mass%, more preferably 0.5 to 10 mass%, and further preferably 1 to 5 mass%.

### 1-5. Photopolymerization initiator

The photocurable composition according to the present invention may contain a photopolymerization initiator. Specific examples of the photopolymerization initiator include:
benzoin compounds such as benzoin, benzoin methyl ether, benzoin ethyl ether, benzoin propyl ether, and benzoin isobutyl ether;
acetophenone compounds such as acetophenone, 2-hydroxy-2-methyl-1-phenylpropan-1-one, diethoxyacetophenone, 1-hydroxycyclohexyl phenyl ketone, 1-[4-(2-hydroxyethoxy)-phenyl]-2-hydroxy-methylpropanone, 2-methyl-1-[4-(methylthio)phenyl]-2-morpholinopropan-1-one, and 2-benzyl-2-dimethylamino-1-(4-morpholinophenyl)-butan-1-one;
anthraquinone compounds such as 2-ethylanthraquinone, 2-t-butylanthraquinone, 2-chloroanthraquinone, and 2-amylanthraquinone;
thioxanthone compounds such as 2,4-diethylthioxanthone, 2-isopropylthioxanthone, 2-chlorothioxanthone, and [3-(3,4-dimethyl-9-oxothioxanthen-2-yl) oxy-2-hydroxypropyl]-trimethylazanium chloride;
ketal compounds such as acetophenone dimethyl ketal, benzyl dimethyl ketal, and benzyl diethyl ketal;
benzophenone compounds such as benzophenone, 4-benzoyl-4'-methyldiphenyl sulfide, and 4,4'-bismethylaminobenzophenone; and
phosphine oxide compounds such as 2,4,6-trimethylbenzoyldiphenylphosphine oxide, bis-(2,6-dimethoxybenzoyl)-2,4,4-trimethylpentylphosphine oxide, and bis(2,4,6-trimethylbenzoyl)-phenylphosphine oxide.

These may be used alone or in combination of two or more thereof.

In particular, the photopolymerization initiator is preferably a benzoin compound, an acetophenone compound, a ketal compound, or a phosphine oxide compound,
more preferably a benzoin compound; an α-hydroxyacetophenone compound such as 2-hydroxy-2-methyl-1-phenylpropan-1-one, 1-hydroxycyclohexyl phenyl ketone, and 1-[4-(2-hydroxyethoxy)-phenyl]-2-hydroxy-methylpropanone; an α-aminoacetophenone compound such as 2-methyl-1-[4-(methylthio)phenyl]-2-morpholinopropan-1-one and 2-benzyl-2-dimethylamino-1-(4-morpholinophenyl)-butan-1-one; a benzyl ketal compound such as benzyl dimethyl ketal and benzyl diethyl ketal; and an acylphosphine oxide compound such as 2,4,6-trimethylbenzoyldiphenylphosphine oxide, bis-(2,6-dimethoxybenzoyl)-2,4,4-trimethylpentylphosphine oxide, and bis(2,4,6-trimethylbenzoyl)-phenylphosphine oxide, and particularly preferably an α-hydroxyacetophenone compound.

The content of the photopolymerization initiator is preferably from 0.05 to 10.0 mass%, more preferably 0.1 to 7.0 mass%, and further preferably 0.2 to 5.0 mass%, in 100 mass% of the photocurable composition. By adjusting the content of the photopolymerization initiator to the above range, the curability is further enhanced.

The content of the photopolymerization initiator with respect to 100 parts by mass of the total of the polymerizable monomers (A) to (C) (particularly, the total of the polymerizable monomer (A) and the polymerizable monomer (B)) is preferably from 0.5 to 20 parts by mass, more preferably from 1.0 to 15 parts by mass, and further preferably from 3.0 to 10 parts by mass.

### 1-6. Polymerization inhibitor

The photocurable composition according to the present invention may contain a polymerization inhibitor as long as the effects of the present invention are not impaired. The photocurable composition has improved thermal stability by containing the polymerization inhibitor.

Examples of the polymerization inhibitor include:
phenols having a molecular weight of less than 300, such as hydroquinone, catechol, resorcin, p-methoxyphenol, t-butylcatechol, t-butylhydroquinone, pyrogallol, 2,4-dihydroxybenzophenone, 2,6-di-t-butyl-p-cresol, butylated hydroxyanisole, and 2,6-di-t-butyl-4-ethylphenol; bisphenols such as 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 3,9-bis[1,1-dimethyl-2-[β-(3-t-butyl-4-hydroxy-5-methylphenyl)propionyloxy]ethyl]-2,4,8,10-tetraoxaspiro[5,5]undecane, and 4,4'-(2,3-dimethyl-tetramethylene)dipyrocatechol; phenol-based antioxidants such as polymeric phenols having a molecular weight of 300 or more, such as stearyl-β-(3,5-di-t-butyl-4-hydroxyphenyl)propionate, propyl 3,4,5-trihydroxybenzoate, 1,1,3-tris(2-methyl-4-hydroxy-5-t-butylphenyl)butane, 1,3,5-trimethyl-2,4,6-tris(3, 5-di-t-butyl-4-hydroxybenzyl)benzene (Irganox (trade name) 1330, manufactured by BASF SE), tetrakis-[methylene-3-(3',5'-di-t-butyl-4'-hydroxyphenyl)propionate]methane, bis[3,3'-bis-(4'-hydroxy-3'-t-butylphenyl) butyric acid] glycol ester, 1,3,5-tris(3',5'-di-t-butyl-4'-hydroxybenzyl)-s-triazine-2,4,6-(1H, 3H, 5H)trione, tocopherol, tocopherol derivatives, and 2-[1-(2-hydroxy-3,5-di-tert-pentylphenyl)ethyl]-4,6-di-tert-pentylphenyl acrylate (SUMILIZER (trade name) GS, manufactured by SUMITOMO CHEMICAL COMPANY, LIMITED);
sulfur-based antioxidants such as 2-mercaptobenzimidazole, dilauryl 3,3'-thiodipropionate, dimyristyl 3,3'-thiodipropionate, distearyl 3,3'-thiodipropionate, 2-mercaptobenzimidazole, tetrakismethylene-3-(laurylthio)propionate methane, and stearylthiopropylamide;
phosphorus-based antioxidants such as triphenyl phosphite, diphenyl isodecyl phosphite, phenyl diisodecyl phosphite, 4,4'-butylidene-bis(3-methyl-6-t-butylphenyl ditridecyl)phosphite, cyclic neopentanetetrayl bis(octadecyl)phosphite, tris(nonylphenyl)phosphite, tris(mono- and/or di-nonylphenyl)phosphite, diisodecyl pentaerythritol diphosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-t-butylphenyl)phosphite, cyclic neopentanetetrayl bis(2,4-di-t-butylphenyl)phosphite, cyclic neopentanetetrayl bis(2,6-di-t-butyl-4-methylphenyl)phosphite, 2,2-methylenebis(4,6-di-t-butylphenyl)octyl phosphite, distearyl pentaerythritol diphosphite, di(2,4-di-t-butylphenyl)phosphite, and tetrakis(2,4-di-t-butylphenyl)-4,4-biphenylene phosphonite;
hindered amine-based antioxidants such as 4-benzoyloxy-2,2,6,6-tetramethylpiperidine, bis(2,2,6,6-tetramethyl-4-piperidinyl)sebacate, bis(1-octyloxy-2,2,6,6-tetramethyl-4-piperidinyl)sebacate, bis(1,2,2,6,6-pentamethyl-4-piperidinyl)sebacate, dimethyl succinate-1-(2-hydroxyethyl)-4-hydroxy -2,2,6,6-tetramethylpiperidine and condensation products thereof, and 8-acetyl-3-dodecyl-7,7,9,9-tetramethyl-1,3,8-triazaspiro[4,5]decane-2,4-dione;
alkoxyamine radicals such as 4-hydroxy-2,2,6,6-tetramethylpiperidin-1-oxyl free radical;
1,1-diphenyl-2-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, cyclohexanone oxime cresol, guaiacol, o-isopropylphenol, butylaldoxime, methyl ethyl ketoxime, and cyclohexanone oxime.

One type of these polymerization inhibitors may be used alone, or a combination of two or more thereof may be used.

The polymerization inhibitor is preferably at least one selected from the group consisting of a phenol-based antioxidant, a sulfur-based antioxidant, a phosphorus-based antioxidant, a hindered amine-based antioxidant, and an alkoxyamine radical. The polymerization inhibitor is more preferably a phenol-based antioxidant and/or an alkoxyamine radical.

The total amount of the phenol-based antioxidant, the sulfur-based antioxidant, the phosphorus-based antioxidant, the hindered amine-based antioxidant, and the alkoxyamine radical (preferably, the total amount of the phenol-based antioxidant and the alkoxyamine radical) is preferably from 50 to 100 mass%, more preferably 80 mass% or more, further preferably 90 mass% or more, and particularly preferably 95 mass% or more, in 100 mass% of the polymerization inhibitor.

The content of the polymerization inhibitor is preferably from 0.01 to 5.0 mass%, more preferably from 0.03 to 3.0 mass%, and further preferably from 0.05 to 1.0 mass%, in 100 mass% of the photocurable composition.

The content of the polymerization inhibitor with respect to 100 parts by mass of the total of the polymerizable monomers (A) to (C) (particularly, the total of the polymerizable monomer (A) and the polymerizable monomer (B)) is preferably from 0.03 to 14.0 parts by mass, more preferably from 0.08 to 9.0 parts by mass, and further preferably from 0.14 to 3.0 parts by mass.

### 1-7. Solvent

The photocurable composition according to the present invention may contain a solvent as long as the effects of the present invention are not impaired. Examples of the solvent include water, monohydric alcohols, glycols, glycol ethers, glycol ether acetates, and trihydric alcohols.

Specific examples of the monohydric alcohol include ethanol, ethanol, and propanol. Preferably, the monohydric alcohol is a monohydric alcohol having from 1 to 5 carbons.

Specific examples of the glycol include:
alkylene glycols (preferably C₂₋₆ alkylene glycols) such as ethylene glycol, propylene glycol, 1,3-butylene glycol, hexylene glycol, and 1,2-hexanediol; and
polyalkylene glycols having a total of 2 or more (preferably from 2 to 20, more preferably from 2 to 10) repeating alkylene glycol units (that is, repeating oxyalkylene groups), such as diethylene glycol, triethylene glycol, dipropylene glycol, tripropylene glycol, and copolymers of ethylene glycol and propylene glycol.

Specific examples of the glycol ether include propylene glycol monomethyl ether, dipropylene glycol monomethyl ether, dipropylene glycol monopropyl ether, and propylene glycol monopropyl ether, and the glycol ether is preferably (poly)C₂₋₃ alkylene glycol C₁₋₄ alkyl ether.

Specific examples of the glycol ether acetate include propylene glycol monomethyl ether acetate and propylene glycol monoethyl ether acetate, and the glycol ether acetate is preferably (poly)C₂₋₃ alkylene glycol mono C₁₋₄ alkyl ether acetate.

Specific examples of the trihydric alcohol include glycerol.

One type of the solvent may be used alone, or a combination of two or more thereof may be used.

The solvent preferably contains at least one selected from the group consisting of a glycol, a glycol ether, a glycol ether acetate, and glycerol. The solvent more preferably contains at least one selected from the group consisting of a glycol and glycerol, and the solvent particularly preferably contains a glycol.

The total content of the glycol, the glycol ether, the glycol ether acetate, and glycerol (particularly, the total content of the glycol and glycerol) is preferably from 50 to 100 mass%, more preferably from 80 to 100 mass%, and further preferably 95 to 100 mass%, in 100 mass% of the solvent.

The content of the glycol is preferably from 50 to 100 mass% or more, more preferably from 70 to 100 mass%, and further preferably from 90 to 100 mass%, in 100 mass% of the solvent.

In the glycol, (poly)C₂₋₆ alkylene glycol containing an alkylene chain having from 2 to 6 carbons as an alkylene chain contained in the glycol molecule is preferable, (poly)C₂₋₃ alkylene glycol containing an alkylene chain having 2 and/or 3 carbons as an alkylene chain contained in the glycol molecule is more preferable, and (poly)propylene glycol containing an alkylene chain having 3 carbons as an alkylene chain contained in the glycol molecule is further preferable.

As the glycol, the solvent contains preferably at least a C₂₋₆ alkylene glycol, more preferably at least ethylene glycol and/or propylene glycol, and further preferably at least propylene glycol, from the viewpoint of improving the thermal stability of the photocurable composition.

The content of the C₂₋₆ alkylene glycol (particularly, the content of propylene glycol) is preferably from 20 to 100 mass%, more preferably from 30 to 95 mass%, and further preferably from 40 to 90 mass%, in 100 mass% of the solvent.

As the glycol, the solvent preferably contains a C₂₋₆ alkylene glycol and a poly C₂₋₆ alkylene glycol, more preferably contains ethylene glycol and/or propylene glycol and a polyethylene glycol and/or a polypropylene glycol, further preferably contains ethylene glycol and/or propylene glycol, and a polyethylene glycol having from 2 to 20 repeating ethylene glycol units (that is, oxyethylene groups) and/or a polypropylene glycol having 2 to 20 repeating propylene glycol units (that is, oxypropylene groups), and particularly preferably contains propylene glycol, and a polyethylene glycol having 2 to 10 repeating ethylene glycol units (that is, oxyethylene groups) and/or a polypropylene glycol having 2 to 10 repeating propylene glycol units (that is, oxypropylene groups). By using such a glycol as the solvent, the compatibility between the solvent and a polymer obtained by curing the photocurable composition according to the present invention becomes better, and the transparency of the resulting support material is enhanced, probably because of the good compatibility of such a solvent with the polymerizable monomer (A). As a result, the surface properties of the resulting photocured molded article tend to be enhanced.

The total content of the C₂₋₆ alkylene glycol and the poly C₂₋₆ alkylene glycol is preferably from 50 to 100 mass% or more, more preferably from 70 to 100 mass%, and further preferably from 80 to 100 mass%, in 100 mass% of the solvent.

The content of the poly C₂₋₆ alkylene glycol with respect to 100 parts by mass of the C₂₋₆ alkylene glycol is preferably from 5 to 200 parts by mass, more preferably from 10 to 150 parts by mass, and further preferably from 20 to 120 parts by mass. In particular, it is preferable to adjust the total content of the polyethylene glycol and the polypropylene glycol with respect to 100 parts by mass of propylene glycol to the above range.

The content of the poly C₂₋₆ alkylene glycol with respect to 100 parts by mass of the polymerizable monomer (A) is preferably from 10 to 500 parts by mass, more preferably from 30 to 450 parts by mass, and further preferably from 50 to 400 parts by mass.

As described above, the solvent may contain water, but the water content is preferably small. The water content is preferably from 0 to 10 mass%, more preferably 5 mass% or less, and further preferably 3 mass% or less, in 100 mass% of the photocurable composition. By adjusting the water content to the above range, the support performance is further enhanced.

The water content in the photocurable composition can be determined by calculation from the water contents of the respective compounds charged. Alternatively, the water content can be determined by the Karl Fischer method.

The total content of the solvent is preferably from 20 to 90 mass%, more preferably from 30 to 85 mass%, further preferably from 40 to 80 mass%, and even further preferably from 50 to 80 mass% or from 55 to 80 mass%, in 100 mass% of the photocurable composition according to the present invention.

### 1-8. Additional additives

The photocurable composition according to the present invention may contain an additional additive as necessary as long as the effects of the present invention are not impaired. Examples of the additive include known additives such as a photoinitiator aid, a surfactant, a colorant, a chain transfer agent, a filler, an emulsion stabilizer, a penetration enhancer, an ultraviolet absorber, a preservative, an antifungal agent, a rust inhibitor, a pH adjuster, a surface tension adjuster, an antifoaming agent, a viscosity modifier, a dispersant, a dispersion stabilizer, a chelating agent, an anti-drying agent (wetting agent), an anti-fading agent, a resistivity modifier, and a film adjuster.

Examples of the photoinitiator aid include tertiary amine compounds such as N,N-dimethylaniline, N,N-diethylaniline, N,N-dimethyl-p-toluidine, ethyl (N,N-dimethylamino)-p-benzoate, isoamylethyl N,N-dimethylamino-p-benzoate, N,N-dihydroxyethylaniline, triethylamine, and N,N-dimethylhexylamine.

Examples of the surfactant include PEG-type nonionic surfactants such as a 1 to 40 mol ethylene oxide (hereinafter abbreviated as EO) adduct of nonylphenol and a 1 to 40 mol EO adduct of stearic acid; polyhydric alcohol-type nonionic surfactants such as sorbitan monopalmitate, sorbitan monostearate, and sorbitan tristearate; fluorine-containing surfactants such as a 1 to 50 mol EO adduct of perfluoroalkyl, perfluoroalkyl carboxylates, and perfluoroalkyl betaines; and modified silicone oils such as polyether-modified silicone oils and (meth)acrylate-modified silicone oils.

Examples of the colorant include toluidine red, permanent carmine FB, fast yellow G, disazo yellow AAA, disazo orange PMP, soluble azo pigments, condensed azo pigments, chelate azo pigments, phthalocyanine blue, indanthrone blue, quinacridone red, dioxazine violet, basic dyes, acidic dyes, aniline black, daylight fluorescent pigments, nitroso pigments, nitro pigments, natural pigments, metal oxides as inorganic pigments, and carbon black.

Examples of the chain transfer agent include hydroquinone, diethylmethylamine, diphenylamine, diethyl disulfide, di-1-octyl disulfide, toluene, xylene, 1-butene, 1-nonene, dichloromethane, carbon tetrachloride, methanol, 1-butanol, ethylthiol, 1-octylthiol, acetone, methyl ethyl ketone, 2-methyl-2-propylaldehyde, 1-pentylaldehyde, phenol, m-cresol, p-cresol, and o-cresol.

Examples of the filler include alumina powder, silica powder, talc, mica, clay, aluminum hydroxide, calcium carbonate, calcium silicate, aluminum powder, copper powder, carbon fiber, glass fiber, cotton fiber, nylon fiber, acrylic fiber, rayon fiber, microballoons, carbon black, metal sulfide, and wood powder.

These additives may be used alone or in combination of two or more thereof.

The content of the additive may be appropriately adjusted according to the additive to be used and is preferably from 0 to 30 mass%, more preferably from 0.05 to 20 mass%, further preferably from 0.05 to 10 mass% or from 0.05 to 5 mass%, in 100 mass% of the photocurable composition.

### 1-9. Method for preparing photocurable composition

The photocurable composition according to the present invention can be prepared using the respective components described above, and the preparation means and conditions thereof are not particularly limited. For example, the preparation includes a method including stirring and mixing using a device capable of mixing or stirring such as a general stirring blade, an ultrasonic homogenizer, a high-speed homogenizer, a high-pressure homogenizer, a planetary stirring device, a three-roll mill, a ball mill, a kitty mill, a disc mill, a pin mill, and a DYNO-MILL. The mixture obtained by the stirring and mixing may be filtered using various filters.

### 1-10. Physical properties of photocurable composition

From the viewpoint of improving an ejection property from an ejection head in an inkjet 3D printer, the photocurable composition according to the present invention preferably has a viscosity of 20 mPa·s or less at an ejection temperature.

In addition, from the viewpoint of ejection stability, the photocurable composition according to the present invention preferably has a low viscosity at 25°C, and specifically, the viscosity thereof is preferably 300 mPa·s or less, more preferably 200 mPa·s or less, further preferably 150 mPa·s or less, and even further preferably 100 mPa·s or less. The lower limit thereof is not particularly limited and is, for example, 5 mPa·s or more, and preferably 20 mPa·s or more.

The viscosity of the photocurable composition can be measured using an E-type viscometer in accordance with JIS Z 8803.

The photocurable composition according to the present invention preferably has a surface tension of 25 to 70 mN/m at 25°C. The surface tension of the photocurable composition can be measured using, for example, a bubble pressure tensiometer BP100 (manufactured by KRUSS GmbH).

The photocurable composition according to the present invention has excellent curability. The photocurable composition according to the present invention is preferably cured by irradiation with ultraviolet light of 100 to 3000 mJ/cm². Here, the term "cure" means that the material is no longer in a liquid state and loses fluidity.

The cured product obtained by using the photocurable composition according to the present invention has excellent support performance. Here, the support performance indicates a capability of the cured product obtained by curing the photocurable composition to support a model material. It can be said that the higher the hardness of the cured product obtained by curing the photocurable composition, the higher the support performance. When the photocurable composition according to the present invention is cured by irradiation with ultraviolet light of 100 mW/cm² for three minutes to yield a plate-like cured product (3 mm thick) and the hardness of the cured product is measured by using a type E durometer, the cured product has the hardness at zero seconds after starting the measurement of preferably 65 or more, more preferably 75 or more, further preferably 80 or more, and even further preferably 85 or more or more than 85.

The cured product formed from the photocurable composition according to the present invention preferably has a property of being easily removable with water. When a cured product piece (2 cm × 2 cm × 3 mm (thickness)) obtained by irradiating the photocurable composition according to the present invention with ultraviolet light of 100 mW/cm² for three minutes is added into 50 mL of water at 25°C and left to stand for three hours, it is preferable that 50 mass% or more of the cured product piece dissolves, it is more preferable that 80 mass% or more of the cured product piece dissolves, and it is particularly preferable that all of the cured product piece dissolves.

The cured product formed from the photocurable composition according to the present invention has excellent transparency. The present inventors have found that the higher the transparency of the cured product formed from the photocurable composition for a support material (specifically, the lower the haze of the cured product), the cleaner (less rough) the surface condition of the resulting photocured molded article (model material). Although the mechanism is not clear, it is considered that, when the support material is formed of a photocurable composition in which a polymerizable monomer having high water solubility is dissolved or dispersed (that is, a photocurable composition having water affinity) and the model material is formed of a photocurable composition in which a polymerizable monomer having low water solubility is dissolved or dispersed (that is, a photocurable composition having no water affinity), the higher transparent a cured product (support material) formed from the photocurable composition for a support material having water affinity is, the less readily the photocurable composition for a support material is mixed with the photocurable composition for a model material having no water affinity. As a result, when both of the photocurable composition for a support material and the photocurable composition for a model material are ejected, the separability at the interface between the photocurable composition for a support material and the photocurable composition for a model material is enhanced, and a photocured molded article (model material) having a clean surface derived from the interface is obtained.

When the haze of a plate-like cured product piece (2 mm thick) obtained by irradiating the photocurable composition according to the present invention with ultraviolet light of 100 mW/cm² for three minutes is measured by using a turbidimeter, it is preferable that the haze is preferably 70% or less, more preferably 50% or less, further preferably 10% or less, and particularly preferably less than 5%.

### 2. Cartridge for inkjet 3D printer

The above photocurable composition is used as an ink for an inkjet 3D printer. The above photocurable composition is usually filled in a cartridge for an inkjet 3D printer before use. The cartridge for an inkjet 3D printer only needs to be filled with the photocurable composition, and a known form of the cartridge for an inkjet 3D printer can be used.

### 3. Method for producing support material

The support material according to the present invention is produced by irradiating the photocurable composition with light. That is, the method for producing a support material according to the present invention only needs to include irradiating the photocurable composition with light, and specifically and preferably, includes a support material layer-forming step A including ejecting the photocurable composition from an ejection head in an inkjet 3D printer (an ejection step a) and irradiating the ejected photocurable composition with light (a light irradiating step a). By repeating the support material layer-forming step A, the support material layer is laminated, and a support material having a desired shape can be produced. For the ejection step a, a known method can be used except that the photocurable composition is to be used.

In addition, a known method can be used for the light irradiating step a. As a light to be irradiated to the photocurable composition, for example, ultraviolet light, near-ultraviolet light, visible light, infrared light, far-infrared light, electron beams, α-rays, γ-rays, and X-rays can be used. In particular, ultraviolet light is preferable.

The exposure dose during light irradiation is preferably from 100 mJ/cm² to 3000 mJ/cm², more preferably from 100 to 2000 mJ/cm², and further preferably from 100 to 1000 mJ/cm².

### 4. Method for producing photocured molded article

A method for producing a photocured molded article according to the present invention includes:
forming a precursor of the shaped article, by repeating a support material layer-forming step A including irradiating the above-described photocurable composition with light and a model material layer-forming step B performed at the same time as and/or a different time from the step A, the step A and the step B being performed a plurality of times, respectively; and
removing a support material composed of the support material layer from the precursor of the photocured molded article.

In the method for producing a photocured molded article, a known method can be used except that the above-described photocurable composition (hereinafter, sometimes referred to as a photocurable composition (I)) is to be used in the support material layer-forming step A. In particular, the support material layer-forming step A preferably includes ejecting the photocurable composition (I) from an ejection head in an inkjet 3D printer (an ejection step a) and irradiating the ejected photocurable composition (I) with light (a light irradiating step a). By repeating the support material layer-forming step A, the support material layer is laminated, and a support material having a desired shape can be produced. The preferred aspects of the ejection step a and the light irradiating step a are the same as those described above.

The model material layer-forming step B preferably includes irradiating a photocurable composition for a model material (hereinafter, may be referred to as a photocurable composition (II)) with light. In particular, the step B preferably includes ejecting the photocurable composition (II) from an ejection head of the inkjet 3D printer (an ejection step b) and irradiating the ejected photocurable composition (II) with light (a light irradiating step b). By repeating the model material layer-forming step B, the model material layer is laminated, and a model material having a desired shape can be produced.

The ejection step b in the model material layer-forming step B is ejecting the photocurable composition (II) from an ejection head in the inkjet 3D printer. In the ejection step b, a known method can be used.

It is preferable that the ejection head for ejecting the photocurable composition (I) in the ejection step a and the ejection head for ejecting the photocurable composition (II) in the ejection step b are different from each other. That is, the inkjet 3D printer used in the present invention preferably includes an ejection head for ejecting the photocurable composition (I) and an ejection head for ejecting the photocurable composition (II).

The light irradiating step b in the model material layer-forming step B is irradiating the photocurable composition (II) ejected in the ejection step b with light, and a known method can be used. The preferred aspect in the light irradiating step b is the same as the preferred aspect in the light irradiating step a.

The precursor of a photocured molded article composed of the support material and the model material is produced by repeating the forming step A and the forming step B, the step A and the step B being performed a plurality of times, respectively.

Specifically, a thin, finely-divided layer of a desired precursor of a photocured molded article is laminated, and thus, the precursor of the photocured molded article can be produced, and examples of each layer include a layer containing only the support material, a layer containing only the model material, and a layer containing the support material and the model material (that is, a layer in which the support material and the model material are present on the same plane). When the layer containing the support material is formed, the forming step A is carried out. When the layer containing the model material is formed, the forming step B is carried out. When the layer containing the support material and the model material is formed, the forming step A and the forming step B may be carried out simultaneously. By repeating these steps appropriately, the desired precursor of the photocured molded article can be produced.

The order of the forming step A, the forming step B, and the step of simultaneously performing the forming step A and the forming step B, and the number of repetitions thereof may be appropriately adjusted according to the shape of the desired precursor of the photocured molded article.

When the forming step A and the forming step B are performed simultaneously, it is preferable to first perform the ejection step a and the ejection step b, and thus, place the photocurable composition (I) and the photocurable composition (II) on the same plane, followed by the light irradiating step a and the light irradiating step b. In this case, the ejection step a and the ejection step b may be performed simultaneously or may be performed at different times. For example, the ejection step b may be performed after the ejection step a or the ejection step a may be performed after the ejection step b. In the present invention, since the photocurable composition (that is, the photocurable composition (I)) for a support material that can yield a cured product with enhanced transparency is used, the separability at the interface between the photocurable composition (I) and the photocurable composition (II) ejected in the ejection step a and the ejection step b is enhanced. And, the light irradiating step a and the light irradiating step b can be performed while the separability of the interface is enhanced, and thus, a photocured molded article (model material) having a clean interface-derived surface can be obtained.

When the support material layer-forming step A and the model material layer-forming step B are performed simultaneously, it is more preferable that the light irradiating step a and the light irradiating step b are performed simultaneously.

The photocurable composition (II) used in the forming step B is preferably a composition containing a polymerizable monomer (D) and a photopolymerization initiator.

The polymerizable monomer (D) is not particularly limited as long as it is a compound having one or more ethylenically unsaturated groups and is a compound that is polymerized by, for example, light. Specific examples thereof include:
(meth)acrylic acid;
alkyl (meth)acrylates such as methyl (meth)acrylate, ethyl (meth)acrylate, isobutyl (meth)acrylate, lauryl (meth)acrylate, stearyl (meth)acrylate, isostearyl (meth)acrylate, and t-butyl (meth)acrylate;
hydroxyalkyl (meth)acrylates such as 2-hydroxyethyl (meth)acrylate and 2-hydroxypropyl (meth)acrylate;
alicyclic hydrocarbon group-containing (meth)acrylates such as cyclohexyl (meth)acrylate, 4-t-butylcyclohexyl (meth)acrylate, isobornyl (meth)acrylate, dicyclopentanyl (meth)acrylate, dimethyloltricyclodecane di(meth)acrylate, tricyclodecane dimethanol di(meth)acrylate, and adamantyl (meth)acrylate;
aromatic hydrocarbon group-containing (meth)acrylates such as phenyl (meth)acrylate and phenoxyethyl (meth)acrylate;
heterocyclic ring-containing (meth)acrylates such as tetrahydrofurfuryl (meth)acrylate, 4-(meth)acryloyloxymethyl-2-methyl-2-ethyl-1,3-dioxolane, 4-(meth)acryloyloxymethyl-2-cyclohexyl-1,3-dioxolane, cyclic trimethylolpropane formal (meth)acrylate, and glycidyl (meth)acrylate;
alkyleneoxy group-containing (meth)acrylates such as tripropylene glycol di(meth)acrylate, 1,6-hexanediol di(meth)acrylate, neopentyl glycol di(meth)acrylate, 1,9-nonanediol di(meth)acrylate, 3-methyl-1,5-pentanediol di(meth)acrylate, 2-n-butyl-2-ethyl-1,3-propanediol di(meth)acrylate, pentaerythritol tri(meth)acrylate, and 2-(2-vinyloxyethoxy) ethyl (meth)acrylate;
(meth)acrylamides such as N-alkyl (meth)acrylamide with an alkyl group having from 1 to 12 carbons introduced therein;
vinyl compounds such as vinyl acetate, vinyl propionate, methyl vinyl ether, styrene, and N-vinylcaprolactam; and
methyl allyloxymethylacrylate.

The polymerizable monomer (D) may be used alone or in combination of two or more thereof. The polymerizable monomer (D) is preferably a monomer containing no metal component, more preferably a monomer containing neither the polymerizable monomer (A) nor the polymerizable monomer (B) (particularly, an ionic monomer).

The polymerizable monomer (D) contains preferably a polymerizable monomer having a water solubility (20°C) of less than 20 g/L, more preferably a polymerizable monomer having a water solubility (20°C) of 10 g/L or less, and further preferably a polymerizable monomer having a water solubility (20°C) of 1 g/L or less.

The content of the polymerizable monomer having a water solubility (20°C) of less than 20 g/L (preferably 10 g/L or less, more preferably 1 g/L or less) is preferably from 50 to 100 mass%, more preferably from 60 to 100 mass%, in 100 mass% of the polymerizable monomer (D), from the viewpoint of preventing the resulting cured product (model material) from dissolving in water.

The content of the polymerizable monomer (D) is preferably from 15 to 90 mass%, more preferably from 20 to 80 mass%, in 100 mass% of the photocurable composition (II), from the viewpoint of improving the curability of the photocurable composition (II).

As a photopolymerization initiator contained in the photocurable composition (II), the compound exemplified as the photopolymerization initiator in the photocurable composition (I) can be used.

The content of the photopolymerization initiator is preferably from 0.05 to 10.0 mass%, more preferably from 0.1 to 7.0 mass%, and further preferably from 0.2 to 5.0 mass%, in 100 mass% of the photocurable composition (II). By adjusting the content of the photopolymerization initiator to the above range, the curability is further enhanced.

In addition, the content of the photopolymerization initiator is preferably from 0.5 to 20 parts by mass, more preferably from 1.0 to 15 parts by mass, and further preferably from 3.0 to 10 parts by mass, in 100 parts by mass of the polymerizable monomer (D).

The photocurable composition (II) may further contain a solvent. As such a solvent, the solvent exemplified as the solvent for the photocurable composition (I) can be used. The content of the solvent is not particularly limited and may be adjusted so that the photocurable composition (II) has a suitable viscosity. The photocurable composition (II) preferably has a viscosity of 5 to 300 mPa·s at 25°C. In addition, from the viewpoint of improving an ejection property from an ejection head in an inkjet 3D printer, the photocurable composition (II) preferably has a viscosity of 20 mPa·s or less at an ejection temperature.

The photocurable composition (II) may contain an additional additive as necessary as long as the effects of the present invention are not impaired. Examples of the additional additive include known additives such as a photoinitiator aid, a polymerization inhibitor, a surfactant, a colorant, a chain transfer agent, a filler, an emulsion stabilizer, a penetration enhancer, an ultraviolet absorber, a preservative, an antifungal agent, a rust inhibitor, a pH adjuster, a surface tension adjuster, an antifoaming agent, a viscosity modifier a dispersant, a dispersion stabilizer, a chelating agent, an anti-drying agent (wetting agent), an anti-fading agent, a resistivity modifier, and a film adjuster.

The model material formed from the photocurable composition (II) needs to have resistance to the removal of the support material. When a cured product piece (2 cm × 2 cm × 3 mm) obtained by irradiating the photocurable composition (II) with ultraviolet light of 100 mW/cm² for three minutes is added into 50 mL of water at 25°C and left to stand for three hours, it is preferable that the cured product piece does not dissolve at all.

Next, the support material composed of the support material layer is removed from the obtained precursor of the photocured molded article, and thus, a desired photocured molded article (photocured molded article composed of the model material) is obtained. The support material can be easily removed by using a polar solvent such as water, alcohol, an acidic solution, or a basic solution. From the viewpoint of safety and reducing environmental impacts, water is preferably used as the polar solvent. As the removal of the support material, a method of leaving the precursor of a photocured molded article to stand in the polar solvent (preferably water) and removing the support material is preferred from the viewpoint of safety and cost. The standing time is not particularly limited, but it is preferably from 1 to 5 hours, more preferably from 0.5 to 2 hours, from the viewpoint of workability. At this time, the temperature of the polar solvent (preferably water) is preferably from 10 to 40°C, and more preferably from 20 to 30°C.

### Examples

Hereinafter, the present invention is described more specifically by way of Examples, but the present invention is not limited by Examples as a matter of course and can be implemented with appropriate modification within a range that can be adapted to the gist described above and below, and all of such implementations are included in the technical scope of the present invention. It should be noted that, hereinafter, "parts" represents "parts by mass", and "%" represents "mass%" unless otherwise specified.

### [Example 1]

Into a 20 mL brown screw-cap tube, 20 parts of methoxy polyethylene glycol acrylate (average number of repeating oxyethylene groups: about 9, manufactured by SHIN-NAKAMURA CHEMICAL Co., Ltd., product name "NK Ester AM-90G"), 15 parts of zinc acrylate, 30 parts of propylene glycol, 30 parts of triethylene glycol, 5 parts of glycerin, and 2 parts of a photopolymerization initiator (manufactured by IGM Resins B.V., product name "Omnirad 2959") were added, and the mixture was stirred and mixed to yield a photocurable composition.

### [Examples 2 to 13 and Comparative Examples 1 to 3]

Photocurable compositions were obtained in the same manner as Example 1 except that the respective compositions were changed to the compositions listed in Table 1.

The photocurable compositions obtained in Examples and Comparative Examples were evaluated by the following evaluation methods.

### (1) Evaluation of viscosity of photocurable composition

The viscosities of the photocurable compositions of Examples 11 to 13 were measured at a temperature of 25°C using a TPE100 viscometer (manufactured by Toki Sangyo Co., Ltd.) by a method in accordance with JIS Z 8803. The obtained viscosities (unit: mPa·s) are listed in Table 1.

### (2) Evaluation of curability

Each of the photocurable compositions was irradiated with ultraviolet light of 100 mW/cm² (wavelength: 365 nm) for 30 seconds to yield a light-irradiated product (2 cm × 2 cm × 3 mm (thickness)). The appearance of the light-irradiated product was visually observed and evaluated. The evaluation criteria are as follows. The results are listed in Table 1.
∘: The light-irradiated product did not flow, that is, the light-irradiated product was cured
×: The light-irradiated product was a liquid or a viscous liquid, and had fluidity

### (3) Evaluation of support performance

Each of the photocurable compositions was irradiated with ultraviolet light of 100 mW/cm² (wavelength 365 nm) for three minutes to yield a cured product (2 cm × 2 cm × 3 mm (thickness)). The hardness of the cured product was measured using a type E durometer (manufactured by KOBUNSHI KEIKI CO.,LTD.), at zero seconds after starting the measurement. The evaluation criteria are as follows. The results are listed in Table 1.
∘: More than 85
△: From 65 to 85
×: Less than 65

### (4) Evaluation of transparency

Each of the photocurable compositions was irradiated with ultraviolet light of 100 mW/cm² (wavelength :365 nm) for three minutes to yield a cured product piece (6 cm × 3 cm × 2 mm). The haze of the cured product piece was measured using a turbidimeter (Haze Meter NDH7000, manufactured by NIPPON DENSHOKU INDUSTRIES CO., LTD.). The evaluation criteria are as follows. The results are listed in Table 1.
∘: Haze of less than 5%
△: Haze of 5% to 50%
×: Haze of more than 50%

### (5) Evaluation of water solubility

Each of the photocurable compositions was irradiated with ultraviolet light of 100 mW/cm² (wavelength :365 nm) for three minutes to yield a cured product piece (2 cm × 2 cm × 3 mm (thickness)). The cured product piece was placed on a wire mesh, and kept in 50 mL of water at 25°C, and the time required for complete dissolution of the cured product piece was measured. The evaluation criteria are as follows. The results are listed in Table 1.
∘: Less than 3 hours
×: 3 hours or more

**[Table 1]**

| | | | | Examples | | | | | | | | | | | | | Comparative Examples | | |
|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 1 | 2 | 3 |
| Composition | Polymerizable monomer (A) | AM-90G | Parts | 20 | 0 | 0 | 0 | 0 | 0 | 0 | 0 | 0 | 0 | 0 | 0 | 0 | 0 | 0 | 0 |
| | | AM-130G | Parts | 0 | 20 | 0 | 0 | 0 | 0 | 0 | 0 | 0 | 0 | 0 | 0 | 0 | 0 | 0 | 0 |
| | | AM-230G | Parts | 0 | 0 | 10 | 0 | 0 | 0 | 0 | 0 | 0 | 0 | 0 | 0 | 0 | 0 | 0 | 0 |
| | | M-90G | Parts | 0 | 0 | 0 | 25 | 0 | 0 | 0 | 0 | 0 | 0 | 0 | 0 | 0 | 0 | 0 | 0 |
| | | M-130G | Parts | 0 | 0 | 0 | 0 | 15 | 15 | 15 | 15 | 10 | 10 | 15 | 15 | 15 | 0 | 0 | 0 |
| | | M-230G | Parts | 0 | 0 | 0 | 0 | 0 | 5 | 0 | 0 | 0 | 0 | 0 | 0 | 0 | 0 | 0 | 0 |
| | | Viscoat#MTG | Parts | 0 | 0 | 0 | 0 | 0 | 0 | 0 | 0 | 0 | 10 | 0 | 0 | 0 | 0 | 0 | 0 |
| | | 50 mol EO adduct of isoprenol | Parts | 0 | 0 | 0 | 0 | 0 | 0 | 0 | 0 | 10 | 0 | 0 | 0 | 0 | 0 | 0 | 0 |
| | Polymerizable monomer (B) | Zinc acrylate | Parts | 15 | 15 | 15 | 15 | 15 | 17 | 11 | 8 | 17 | 15 | 0 | 7.5 | 10 | 10 | 15 | 0 |
| | | Potassium acrylate | Parts | 0 | 0 | 0 | 0 | 0 | 0 | 10 | 12 | 0 | 0 | 15 | 7.5 | 5 | 0 | 0 | 0 |
| | | 4-acryloylmorpholine | Parts | 0 | 0 | 0 | 0 | 0 | 0 | 0 | 0 | 0 | 0 | 0 | 0 | 0 | 0 | 25 | 15 |
| | | Hydroxyethyl acrylamide | Parts | 0 | 0 | 0 | 0 | 0 | 0 | 0 | 0 | 0 | 0 | 0 | 0 | 0 | 0 | 0 | 10 |
| | Solvent | Propylene glycol | Parts | 30 | 40 | 40 | 40 | 35 | 52 | 49 | 50 | 44 | 45 | 55 | 55 | 55 | 90 | 35 | 40 |
| | | Triethylene glycol | Parts | 30 | 20 | 35 | 20 | 0 | 12 | 15 | 0 | 20 | 20 | 15 | 15 | 15 | 0 | 0 | 20 |
| | | Glycerin | Parts | 5 | 0 | 0 | 0 | 15 | 0 | 0 | 0 | 0 | 0 | 0 | 0 | 0 | 0 | 15 | 15 |
| | | Polyethylene glycol 400 | Parts | 0 | 10 | 0 | 0 | 0 | 0 | 0 | 0 | 0 | 0 | 0 | 0 | 0 | 0 | 10 | 0 |
| | | Polypropylene glycol (diol type, Mn of 400) | Parts | 0 | 0 | 0 | 0 | 20 | 0 | 0 | 15 | 0 | 0 | 0 | 0 | 0 | 0 | 0 | 0 |
| | Photopolymerization initiator | Omnirad 2959 | Parts | 2 | 2 | 2 | 2 | 2 | 2 | 2 | 2 | 2 | 2 | 2 | 2 | 2 | 2 | 2 | 2 |
| | Content of polyvalent metal ion-containing ionic monomer in polymerizable monomer (B) | | % | 100 | 100 | 100 | 100 | 100 | 100 | 52 | 40.0 | 100 | 100 | 0 | 50 | 67 | 100 | 38 | 0 |
| | Total content of polymerizable monomers (A) and (B) in photocurable composition | | % | 34 | 33 | 25 | 39 | 29 | 36 | 35 | 34 | 36 | 34 | 29.4 | 29 | 29 | 9.8 | 39 | 25 |
| Evaluation items | | Viscosity (mPa·s) at 25°C | | - | - | - | - | - | - | - | - | - | - | 107.9 | 94.7 | 89.4 | - | - | - |
| | | Curability | | ○ | ○ | ○ | ○ | ○ | ○ | ○ | ○ | ○ | ○ | ○ | ○ | ○ | ○ | ○ | × |
| | | Support performance | | ○ | ○ | ○ | ○ | ○ | ○ | ○ | Δ | ○ | ○ | Δ | ○ | ○ | × | × | - |
| | | Transparency | | ○ | ○ | ○ | ○ | ○ | ○ | ○ | ○ | Δ | ○ | ○ | ○ | ○ | × | ○ | - |
| | | Water solubility | | ○ | ○ | ○ | ○ | ○ | ○ | ○ | ○ | ○ | ○ | ○ | ○ | ○ | × | × | - |

Details of each component listed in Table 1 are as follows.
AM-90G: Methoxy polyethylene glycol acrylate (average number of repeating oxyethylene groups: about 9), manufactured by SHIN-NAKAMURA CHEMICAL Co., Ltd., product name "NK Ester AM--90G"
AM-130G: Methoxy polyethylene glycol acrylate (average number of repeating oxyethylene groups: about 13), manufactured by SHIN-NAKAMURA CHEMICAL Co., Ltd., product name "NK Ester AM--130G"
AM-230G: Methoxy polyethylene glycol acrylate (average number of repeating oxyethylene groups: about 23), manufactured by SHIN-NAKAMURA CHEMICAL Co., Ltd., product name "NK Ester AM-230G"
M-90G: Methoxy polyethylene glycol methacrylate (average number of repeating oxyethylene groups: about 9), manufactured by SHIN-NAKAMURA CHEMICAL Co., Ltd., product name "NK Ester M-90G"
M-130G: Methoxy polyethylene glycol methacrylate (average number of repeating oxyethylene groups: about 13), manufactured by SHIN-NAKAMURA CHEMICAL Co., Ltd., product name "NK Ester M-130G"
M-230G: Methoxy polyethylene glycol methacrylate (average number of repeating oxyethylene groups: about 23), manufactured by SHIN-NAKAMURA CHEMICAL Co., Ltd., product name "NK Ester M-230G"
Viscoat#MTG: Methoxy triethylene glycol acrylate, manufactured by OSAKA ORGANIC CHEMICAL INDUSTRY LTD., product name "Viscoat#MTG"
Polyethylene glycol 400: Manufactured by FUJIFILM Wako Pure Chemical Corporation, product name "Polyethylene Glycol 400"
Polypropylene glycol (diol type, Mn of 400): Manufactured by FUJIFILM Wako Pure Chemical Corporation, product name "Polypropylene Glycol, Diol Type, 400"
Omnirad 2959 (product name): 1-[4-(2-hydroxyethoxy)-phenyl]-2-hydroxy-methylpropanone (acetophenone-type photopolymerization initiator), manufactured by IGM Resins B.V.

As shown in Table 1, the photocurable resin compositions of Examples containing the polymerizable monomer (A) having an oxyalkylene group and the water-soluble polymerizable monomer (B) other than the polymerizable monomer (A) had excellent curability, and cured products (support materials) having enhanced support performance, transparency, and water solubility were obtained.

## Claims

1. A photocurable composition for a support material formed by an inkjet 3D printer, the photocurable composition comprising a polymerizable monomer (A) having an oxyalkylene group and a water-soluble polymerizable monomer (B) other than the polymerizable monomer (A).

2. The photocurable composition according to claim 1, wherein the polymerizable monomer (B) is an ionic monomer having an ionic group.

3. The photocurable composition according to claim 2, wherein the ionic monomer contains an ionic monomer having a polyvalent metal ion that is a conjugate of the ionic group.

4. The photocurable composition according to claim 3, wherein a content of the ionic monomer having a polyvalent metal ion is 50 mass% or more in 100 mass% of the polymerizable monomer (B).

5. The photocurable composition according to claim 1, wherein a total content of the polymerizable monomer (A) and the polymerizable monomer (B) is less than 50 mass% in 100 mass% of the photocurable composition.

6. The photocurable composition according to claim 1, wherein the polymerizable monomer (A) is a monomer represented by Formula (1):
Z-(R^{a}-O)ₙ-R^{b} (1)
where in Formula (1), Z represents an ethylenically unsaturated bond-containing group, R^{a} represents an alkylene group, R^{b} represents a hydrogen atom or a hydrocarbon group optionally having a substituent, and n represents an integer of 1 or more; provided that, when n is an integer of 2 or more, a plurality of R^{a}s are independently the same or different from each other.

7. The photocurable composition according to claim 6, wherein in Formula 1,
Z represents a group represented by CH₂=C(R¹)-C(=O)-O-* or CH₂=C(R¹)-(CH₂)ₘ-O-*, where R¹ represents a hydrogen atom or an alkyl group having from 1 to 4 carbons and optionally having a substituent, m represents an integer of 0 to 6, and * represents a bond;
R^{a} represents an alkylene group having from 1 to 4 carbons;
R^{b} represents a hydrogen atom or an alkyl group having from 1 to 4 carbons; and
n represents an integer of 1 to 100.

8. The photocurable composition according to claim 1, further comprising a photopolymerization initiator.

9. The photocurable composition according to claim 1, wherein, when a cured product piece (2 cm × 2 cm × 3 mm) obtained by irradiation with light of 100 mW/cm² for three minutes is added into 50 mL of water at 25°C and left to stand for three hours, 50 mass% or more of the cured product piece dissolves.

10. A method for producing a support material, the method comprising irradiating the photocurable composition described in any one of claims 1 to 9 with light.

11. A method for producing a photocured molded article, the method comprising:
forming a precursor of the photocured molded article, by repeating a support material layer-forming step A of irradiating the photocurable composition described in any one of claims 1 to 9 with light and a model material layer-forming step B performed at the same time as and/or a different time from the forming step A, the step A and the step B being performed a plurality of times, respectively; and
removing a support material composed of the support material layer from the precursor of the photocured molded article.

12. Use of the photocurable composition described in any one of claims 1 to 9 for forming a support material by an inkjet 3D printer.

13. A method of using a photocurable composition (I), the method comprising ejecting
the photocurable composition (I) described in any one of claims 1 to 9, and
a photocurable composition (II) different from the photocurable composition (I) from different ejection heads in an inkjet 3D printer.
